(19) **Europäisches Patentamt / European Patent Office / Office européen des brevets**

(11) **EP 2 204 425 B1**

(12) **EUROPEAN PATENT SPECIFICATION**

(45) Date of publication and mention of the grant of the patent:
**26.12.2012 Bulletin 2012/52**

(21) Application number: **08841435.4**

(22) Date of filing: **15.10.2008**

(51) Int Cl.:
*C09J 7/02* (2006.01)   *B32B 27/00* (2006.01)
*B32B 27/30* (2006.01)   *C09J 4/02* (2006.01)
*C09J 11/08* (2006.01)   *C09J 133/00* (2006.01)
*C09J 11/04* (2006.01)   *C09J 7/00* (2006.01)

(86) International application number:
**PCT/JP2008/002921**

(87) International publication number:
**WO 2009/054108 (30.04.2009 Gazette 2009/18)**

(54) **THERMAL EXPANSION TYPE REMOVABLE ACRYLIC PRESSURE-SENSITIVE ADHESIVE TAPE OR SHEET AND METHOD OF REMOVAL**

AUF WÄRMEAUSDEHNUNG BASIERENDES ABLÖSBARES ACRYLHAFTKLEBEBAND ODER FOLIE UND ABLÖSEVERFAHREN

RUBAN OU FEUILLE D'ADHÉSIF SENSIBLE À LA PRESSION ACRYLIQUE AMOVIBLE DE TYPE À DILATATION THERMIQUE ET PROCÉDÉ DE RETRAIT

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **22.10.2007   JP 2007273915**
**20.06.2008   JP 2008162476**

(43) Date of publication of application:
**07.07.2010 Bulletin 2010/27**

(73) Proprietors:
- **Nitto Denko Corporation**
  **Ibaraki-shi, Osaka 567-8680 (JP)**
- **NITTO EUROPE N.V**
  **3600 Genk (BE)**

(72) Inventors:
- **YAMANAKA, Eiji**
  **Ibaraki-shi**
  **Osaka 567-8680 (JP)**

- **NAKASHIMA, Tooru**
  **Ibaraki-shi**
  **Osaka 567-8680 (JP)**
- **BOSSAERT, Greet**
  **223600 Genk (BE)**
- **FORIER, Bart**
  **22 3600 Genk (BE)**
- **EEVERS, Walter**
  **22 3600 Genk (BE)**

(74) Representative: **Grünecker, Kinkeldey, Stockmair & Schwanhäusser**
**Leopoldstrasse 4**
**80802 München (DE)**

(56) References cited:
| | |
|---|---|
| EP-A2- 1 592 058 | WO-A1-2007/105654 |
| JP-A- 5 279 640 | JP-A- 7 145 357 |
| JP-A- 7 179 828 | JP-A- 2003 261 842 |
| JP-A- 2004 266 179 | JP-A- 2004 300 231 |
| US-A1- 2004 003 883 | US-A1- 2004 018 353 |

**Description**

Technical Field

The present invention relates to heat-expandable removable acrylic pressure-sensitive adhesive tapes and sheets that maintain a high adhesion force (adhesive strength at room temperature) upon bonding but show a reduced adhesive strength as a result of heating upon peeling(removing), and can thereby be easily debonded. It also relates to methods of peeling the heat-expandable/peelable(removable) acrylic pressure-sensitive adhesive tapes and sheets.

Background Art

Base polymers for use in acrylic pressure-sensitive adhesives have been prepared by subjecting acrylic monomers mainly containing alkyl (meth)acrylates to solution polymerization in organic solvents. Recently, demands have been made to produce pressure-sensitive adhesive layers without using such organic solvents, so as to avoid or control air pollution and other environmental issues for the conservation of the global environment. Thus, in aspects of safety and environment, it is advantageous to produce pressure-sensitive adhesive tapes or sheets (hereinafter "tape(s) or sheet(s)" is also simply referred to as "tape(s)" or "sheet(s)") by subjecting acrylic monomers to polymerization through ultraviolet irradiation without using solvents to give pressure-sensitive adhesive layers. In addition, demands on savings and recycling of resources have increasingly made, with recently increasing environmental consciousness.

On the other hand, there are pressure-sensitive adhesive tapes which have pressure-sensitive adhesive layers containing microparticles. Among them, acrylic foam-like pressure-sensitive adhesive tapes, which are acrylic pressure-sensitive adhesive tapes containing microparticles in their substrate and/or pressure-sensitive adhesive layer, are frequently used in applications requiring satisfactory adhesive strength and shear strength at room temperature (ordinary temperature). Exemplary applications include bonds of parts typically in automobiles, machine parts, electrical appliances, and construction materials.

Such acrylic foam-like pressure-sensitive adhesive tapes (Patent Document 1-7) developed under these circumstances have high adhesive strengths to exhibit high reliability in bonding, but their high adhesive strengths (bond strengths) make it difficult to separate or debond the bonded parts.

To avoid this, there has been proposed a pressure-sensitive adhesive tape in order to exhibit excellent adhesion force (adhesive strength at room temperature) and easy-peelability upon heating (Patent Document 8). The pressure-sensitive adhesive tape, however, may not be stably peeled off from some adherends, because it is configured to peel from an adherend at the interface between the adherend and the pressure-sensitive adhesive tape (i.e., the interface between the adherend and the adhesive face) upon heating, and its adhesive strength (adhesion) thereby varies from one adherend to another. Additionally, the pressure-sensitive adhesive tape may not exhibit sufficient adhesion to some adherends. Thus, further improvements have been demanded.

Patent Document 1: Japanese Examined Patent Application Publication (JP-B) No. S57-17030(U.S. Patent No. 4223067)
Patent Document 2: Japanese Unexamined Patent Application Publication (JP-A) No. H07-48549
Patent Document 3: JP-A No. 2001-212900
Patent Document 4: JP-A No. 2002-088320
Patent Document 5: JP-A No. 2002-003800
Patent Document 6: JP-A No. 2002-121505
Patent Document 7: JP-A No. 2004-018761
Patent Document 8: JP-A No. 2008-120903

EP-A-1592058 discloses a heat-peelable pressure-sensitive adhesive sheet having a heat-expandable layer containing a foaming agent comprising heat-expandable microspheres.

US-A-2004/0003883 discloses an energy-beam-curable thermo-releasable pressure-sensitive adhesive sheet comprising a base material, an energy-beam-curable thermo-expandable viscoelastic layer containing thermo-expandable microspheres, and a pressure-sensitive layer.

Disclosure of Invention

Problems to be Solved by the Invention

An object of the present invention is to provide a heat-expandable/peelable acrylic pressure-sensitive adhesive tape that maintains a high adhesion force upon bonding with an adhered part, and can be easily separated or debonded from the bonded part by heating, regardless of the material constituting the adherend.

Another object of the present invention is to provide a heat-expandable/peelable acrylic pressure-sensitive adhesive tape that maintains a high adhesion force upon bonding with an adhered part, and can be easily separated or debonded from the bonded part by application of current without heating the entire adherend including the bonded part, regardless of the material constituting the adherend. Means for Solving the Problems

After intensive investigations to achieve the above objects, the present inventors have found that, in pressure-sensitive adhesive tapes including at least a viscoelastic substrate containing microparticles and, arranged at least on one side thereof, a pressure-sensitive adhesive layer containing a blowing agent, when a peelable or peel-assisting film layer is arranged between the viscoelastic substrate and the pressure-sensitive adhesive layer with or without the interposition of another layer, the resulting peelable pressure-sensitive adhesive tapes maintain a high adhesion force upon bonding with an adhered part and can be easily separated or debonded from the bonded part by expansion or foaming of the blowing agent as a result of heating, regardless of the material constituting the adherend. They have also found that, of such configurations, when the blowing agent-containing pressure-sensitive adhesive layer is arranged in direct contact with the peelable or peel-assisting film layer, there is provided a peelable pressure-sensitive adhesive tape that can be easily separated or debonded as a result of peeling at the interface between the blowing agent-containing pressure-sensitive adhesive layer and the peelable or peel-assisting film layer. Additionally, they have found that when an exothermic film that generates heat upon application of current is used as the peelable or peel-assisting film, there can be provided a peelable pressure-sensitive adhesive tape that can be easily separated or debonded by application of current, without heating the entire adherend including the bonded part, regardless of the material constituting the adherend. The present invention has been made based on these findings.

Specifically, according to an embodiment of the present invention, there is provided a heat-expandable/peelable acrylic pressure-sensitive adhesive tape or sheet which includes at least a pressure-sensitive adhesive layer containing a blowing agent; a peelable or peel-assisting film layer; and a viscoelastic substrate containing microparticles, in which at least the peelable or peel-assisting film layer and the viscoelastic substrate constitute a multilayer structure, and the multilayer structure is arranged on or above at least one side of the pressure-sensitive adhesive layer so that the pressure-sensitive adhesive layer is in contact with the peelable or peel-assisting film layer with or without the interposition of another layer.

In the heat-expandable/peelable acrylic pressure-sensitive adhesive tape or sheet, the multilayer structure may include the peelable or peel-assisting film layer and the viscoelastic substrate alone. The pressure-sensitive adhesive layer may be arranged in direct contact with the peelable or peel-assisting film layer.

In a preferred embodiment, the multilayer structure includes the peelable or peel-assisting film layer and the viscoelastic substrate alone and is arranged on one side of the pressure-sensitive adhesive layer so that the pressure-sensitive adhesive layer is in direct contact with the peelable or peel-assisting film layer, and the tape or sheet further includes another viscoelastic substrate containing microparticles and being arranged on the other side of the pressure-sensitive adhesive layer. In another preferred embodiment, the multilayer structure includes the peelable or peel-assisting film layer and the viscoelastic substrate alone and is arranged on both sides of the pressure-sensitive adhesive layer so that the pressure-sensitive adhesive layer is in direct contact with the peelable or peel-assisting film layer.

The peelable or peel-assisting film preferably includes a poly(ethylene terephthalate) film.

In another embodiment, the peelable or peel-assisting film includes an exothermic film that generates heat upon application of current. The exothermic film may be composed of a metal foil.

The viscoelastic substrate is preferably a polymerized layer derived from a polymerizable composition containing microparticles, which polymerizable composition contains a vinyl monomer mixture or a partially polymerized prepolymer thereof, the vinyl monomer mixture mainly containing at least an alkyl (meth)acrylate having an alkyl moiety containing two to eighteen carbon atoms; a photoinitiator; microparticles; and a polyfunctional (meth)acrylate.

The polymerizable composition preferably contains 100 parts by weight of the vinyl monomer mixture or a partially polymerized prepolymer thereof; 0.001 to 5 parts by weight of the photoinitiator; 0.001 to 5 parts by weight of the polyfunctional (meth)acrylate; and the microparticles.

The microparticles in the viscoelastic substrate preferably have an average particle diameter of 30 to 100 μm. The viscoelastic substrate preferably contains the microparticles in an amount of 5 to 50 percent by volume based on the total volume of the viscoelastic substrate.

In a preferred embodiment, the blowing agent-containing pressure-sensitive adhesive layer is a polymerized layer derived from a pressure-sensitive adhesive composition containing a blowing agent, which pressure-sensitive adhesive composition contains a vinyl monomer mixture or a partially polymerized prepolymer thereof, the vinyl monomer mixture mainly containing an alkyl (meth)acrylate having an alkyl moiety containing two to eighteen carbon atoms; a photoinitiator; a blowing agent; and a polyfunctional (meth)acrylates, in which the blowing agent-containing pressure-sensitive adhesive layer has a solvent-insoluble content of 50 to 99 percent by weight. The pressure-sensitive adhesive composition preferably contains 100 parts by weight of the vinyl monomer mixture or a partially polymerized prepolymer thereof, the vinyl monomer mixture mainly containing an alkyl (meth)acrylate having an alkyl moiety containing two to eighteen carbon atoms; 0.001 to 5 parts by weight of the photoinitiator; 10 to 200 parts by weight of the blowing agent; and 0.001 to 5 parts by weight of the polyfunctional (meth)acrylate.

The blowing agent in the pressure-sensitive adhesive layer is preferably composed of heat-expandable microspheres. The pressure-sensitive adhesive layer preferably has a thickness of 1 to 300 $\mu$m.

According to another embodiment of the present invention, there is provided a method of peeling a heat-expandable/peelable acrylic pressure-sensitive adhesive tape or sheet, the adhesive tape or sheet at least including a pressure-sensitive adhesive layer containing a blowing agent; a peelable or peel-assisting film layer; and a viscoelastic substrate containing microparticles, in which at least the peelable or peel-assisting film layer and the viscoelastic substrate constitute a multilayer structure, and the multilayer structure is arranged on or above at least one side of the pressure-sensitive adhesive layer so that the pressure-sensitive adhesive layer is in contact with the peelable or peel-assisting film layer with or without the interposition of another layer. This method includes the step of heating the heat-expandable/peelable acrylic pressure-sensitive adhesive tape or sheet to allow the blowing agent to expand or foam, to reduce the adhesive strength between an adherend and the pressure-sensitive adhesive layer and/or to reduce the adhesive strength between the pressure-sensitive adhesive layer and the peelable or peel-assisting film layer or the other layer.

According to yet another embodiment of the present invention, there is provided a method of peeling a heat-expandable/peelable acrylic pressure-sensitive adhesive tape or sheet, the adhesive tape or sheet at least including a pressure-sensitive adhesive layer containing a blowing agent; an exothermic film layer that generates heat upon application of current; and a viscoelastic substrate containing microparticles, in which at least the exothermic film layer and the viscoelastic substrate constitute a multilayer structure, and the multilayer structure is arranged on at least one side of the pressure-sensitive adhesive layer so that the pressure-sensitive adhesive layer is in contact with the exothermic film layer with or without the interposition of another layer. This method includes the step of applying a current to the exothermic film layer to allow the exothermic film layer to generate heat and thereby cause the blowing agent to expand or foam, to reduce the adhesive strength between an adherend and the pressure-sensitive adhesive layer and/or to reduce the adhesive strength between the pressure-sensitive adhesive layer and the exothermic film layer or the other layer.

A heat-expandable/peelable acrylic pressure-sensitive adhesive tape or sheet according to embodiments of the present invention maintains a high adhesion force upon bonding with an adhered part and can be easily separated or debonded at the bonded part by expansion or foaming of the blowing agent as a result of heating, regardless of the material constituting the adherend. Specifically, the tape can be further easily separated or debonded due to peeling at the interface between the pressure-sensitive adhesive layer and the peelable or peel-assisting film layer. In another embodiment, the peelable or peel-assisting film includes an exothermic film that generates heat upon application of current. The tape according to this embodiment can be easily separated or debonded upon application of current, without heating the entire adherend including the bonded part. This helps to avoid the adherend from deterioration due to heat and enable the adherend to be reused. In addition, this helps to reduce the size of an apparatus for peeling.

Brief Description of Drawings

[Fig. 1] Fig. 1 is schematic cross-sectional views illustrating production processes (steps) of a heat-expandable/peelable acrylic pressure-sensitive adhesive tape according to an embodiment of the present invention.
[Fig. 2] Fig. 2 is schematic cross-sectional views illustrating production processes (steps) of a heat-expandable/peelable acrylic pressure-sensitive adhesive tape according to another embodiment of the present invention.
[Fig. 3] Fig. 3 is schematic cross-sectional views illustrating production processes (steps) of a heat-expandable/peelable acrylic pressure-sensitive adhesive tape according to another embodiment of the present invention.
[Fig. 4] Fig. 4 is schematic cross-sectional views illustrating heat-expandable/peelable acrylic pressure-sensitive adhesive tapes according to embodiments of the present invention.

Reference Numerals

1a the first step of Production Embodiment 1
1b the second step of Production Embodiment 1
1c the third step of Production Embodiment 1
1d the fourth step of Production Embodiment 1
1e heat-expandable/peelable acrylic pressure-sensitive adhesive tape produced according to Production Embodiment 1

2a the first step of Production Embodiment 2

2b the second step of Production Embodiment 2

2c the third step of Production Embodiment 2

2d the fourth step of Production Embodiment 2

2e the fifth step of Production Embodiment 2

2f heat-expandable/peelable acrylic pressure-sensitive adhesive tape produced according to Production Embodiment 2

3a the first step of Production Embodiment 3

3b the second step of Production Embodiment 3

3c the third step of Production Embodiment 3

3d the fourth step of Production Embodiment 3

3e the fifth step of Production Embodiment 3

3f heat-expandable/peelable acrylic pressure-sensitive adhesive tape produced according to Production Embodiment 3

11 blowing agent-containing pressure-sensitive adhesive composition layer

12 microparticle-containing polymerizable composition layer

13a process separator

13b process separator

14 peelable or peel-assisting film

15 active energy rays

16 microparticle-containing viscoelastic substrate

17 blowing agent-containing pressure-sensitive adhesive layer

18 heat-expandable/peelable acrylic pressure-sensitive adhesive tape

19 heat-expandable/peelable acrylic pressure-sensitive adhesive tape

20 heat-expandable/peelable acrylic pressure-sensitive adhesive tape

4a heat-expandable/peelable acrylic pressure-sensitive adhesive tape

4b heat-expandable/peelable acrylic pressure-sensitive adhesive tape

4c heat-expandable/peelable acrylic pressure-sensitive adhesive tape

4d heat-expandable/peelable acrylic pressure-sensitive adhesive tape

4e heat-expandable/peelable acrylic pressure-sensitive adhesive tape

41 peelable or peel-assisting film

42 blowing agent-containing pressure-sensitive adhesive laye

43 microparticle-containing viscoelastic substrate

44a process separator

44b process separator

Best Modes for Carrying Out the Invention

[Heat-Expandable/Peelable Acrylic Pressure-Sensitive Adhesive Tape]

Heat-expandable/peelable acrylic pressure-sensitive adhesive tapes according to embodiments of the present invention at least include a pressure-sensitive adhesive layer containing a blowing agent (hereinafter also briefly referred to as "blowing agent-containing pressure-sensitive adhesive layer" or simply "pressure-sensitive adhesive layer"), a peelable or peel-assisting film layer, and a viscoelastic substrate containing microparticles (hereinafter also briefly referred to as "microparticle-containing viscoelastic substrate" or simply "viscoelastic substrate"), in which at least the peelable or peel-assisting film layer and the viscoelastic substrate constitute a multilayer structure, and the multilayer structure is arranged on or above at least one side of the pressure-sensitive adhesive layer so that the pressure-sensitive adhesive layer is in contact with the peelable or peel-assisting film layer with or without the interposition of another layer. Typically, a heat-expandable/peelable acrylic pressure-sensitive adhesive tape according to an embodiment of the present invention is a pressure-sensitive adhesive tape which includes a multilayer structure composed of a peelable or peel-assisting film layer and a microparticle-containing viscoelastic substrate and arranged on at least one side of a blowing agent-containing pressure-sensitive adhesive layer so that the blowing agent-containing pressure-sensitive adhesive layer is in contact with the peelable or peel-assisting film layer. Specifically, in this configuration, the peelable or peel-assisting film layer is arranged between the viscoelastic substrate and the blowing agent-containing pressure-sensitive adhesive layer. Such heat-expandable/peelable acrylic pressure-sensitive adhesive tapes of this configuration are pressure-sensitive adhesive tapes used as peelable adhesive tapes which maintain a high adhesion force upon bonding with an adherend but undergo debond or peeling between the adherend and the blowing agent-containing pressure-sensitive adhesive layer or between the peelable or peel-assisting film layer and the blowing agent-containing pressure-sensitive adhesive layer by expansion or foaming of the blowing agent as a result of heating. The heating herein may be conducted by a heating treatment at 130°C for 10 minutes; or, when an exothermic film that generates heat upon application of current is used as the peelable or peel-assisting film, by an electric heating treatment or an induction heating (high-frequency dielectric heating) treatment. The tapes herein preferably further include a separator (release film) on the adhesive face to protect the adhesive face.

The heat-expandable/peelable acrylic pressure-sensitive adhesive tapes may further include one or more other layers within ranges not adversely affecting the advantages of the present invention. Exemplary other layers include intermediate layers and under coats.

Heat-expandable/peelable acrylic pressure-sensitive adhesive tapes according to embodiments of the present invention may each be a pressure-sensitive adhesive double-coated sheet having adhesive faces at both sides thereof; or a pressure-sensitive adhesive single-coated sheet having an adhesive face on one side thereof. In such heat-expandable/peelable acrylic pressure-sensitive adhesive tapes in the form of a pressure-sensitive adhesive double-coated sheet, blowing agent-containing pressure-sensitive adhesive layers alone may constitute the two adhesive faces. Alternatively, it is also acceptable that a blowing agent-containing pressure-sensitive adhesive layer constitutes one of the two adhesive faces, and a pressure-sensitive adhesive layer other than blowing agent-containing pressure-sensitive adhesive layers (this layer hereinafter also referred to as "blowing agent-free pressure-sensitive adhesive layer") constitutes the other adhesive face. When the viscoelastic substrate exhibits adhesiveness to the adherend, the viscoelastic substrate may constitute one or both of the adhesive faces. The blowing agent-free pressure-sensitive adhesive layer may be prepared according typically to a known method of forming a pressure-sensitive adhesive layer using a pressure-sensitive adhesive. Exemplary pressure-sensitive adhesives herein include acrylic pressure-sensitive adhesives, rubber pressure-sensitive adhesives, vinyl alkyl ether pressure-sensitive adhesives, silicone pressure-sensitive adhesives, polyester pressure-sensitive adhesives, polyamide pressure-sensitive adhesives, urethane pressure-sensitive adhesives, fluorine pressure-sensitive adhesives, and epoxy pressure-sensitive adhesives. The thickness of the blowing agent-free pressure-sensitive adhesive layer is not particularly limited and can be suitably set according to the purpose and method of use of the tape.

Heat-expandable/peelable acrylic pressure-sensitive adhesive tapes according to embodiments of the present invention may be wound as a roll or stacked as a multilayer sheet. Specifically, the heat-expandable/peelable acrylic pressure-sensitive adhesive tapes may be in the form typically of sheets or tapes. In heat-expandable/peelable acrylic pressure-sensitive adhesive tapes in the form of wound rolls, the adhesive faces may be protected by a separator or may be protected by a release-treated layer (backing layer) arranged on the other side of the support (substrate). Exemplary release treatment agents (release agents) for use in the formation of a release-treated layer (backing layer) on the other side of the support include silicone release agents and long-chain alkyl release agents.

Viscoelastic Substrate Containing Microparticles

The viscoelastic substrate containing microparticles may be a polymerized layer derived from a polymerizable composition containing microparticles (hereinafter also briefly referred to as "microparticle-containing polymerizable composition" or simply "polymerizable composition"). The microparticle-containing viscoelastic substrate is not particularly limited, as long as it contains microparticles (fine particles) and has viscoelastic properties. The microparticle-containing viscoelastic substrate may be used as a viscoelastic article or layer that exhibits adhesion (tackiness) to the adherend. In addition, the microparticle-containing viscoelastic substrate may be a viscoelastic substrate containing bubbles in addition to microparticles (hereinafter also referred to as "bubble-bearing microparticle-containing viscoelastic substrate").

The number of microparticle-containing viscoelastic substrates in the heat-expandable/peelable acrylic pressure-sensitive adhesive tapes is generally one or two, but it is not particularly limited, as long as the microparticle-containing viscoelastic substrate constitutes at least one multilayer structure comprised of at least a peelable or peel-assisting film layer and the microparticle-containing viscoelastic substrate, and at least one of the multilayer structure(s) in the heat-expandable/peelable acrylic pressure-sensitive adhesive tapes is arranged so that the pressure-sensitive adhesive layer is in contact with the peelable or peel-assisting film layer with or without the interposition of another layer. Typically, in an embodiment, the microparticle-containing viscoelastic substrate constitutes at least one multilayer structure with the peelable or peel-assisting film layer alone, and at least one of the multilayer structure(s) is arranged in the heat-expandable/peelable acrylic pressure-sensitive adhesive tape so that the pressure-sensitive adhesive layer is in contact with the peelable or peel-assisting film layer. In this embodiment, the number of microparticle-containing viscoelastic substrates is not particularly limited but is generally one or two. The layer composed of the microparticle-containing viscoelastic substrate may be an outermost layer in the heat-expandable/peelable acrylic pressure-sensitive adhesive tape. When a heat-expandable/peelable acrylic pressure-sensitive adhesive tape includes two or more microparticle-containing viscoelastic substrates, microparticle-containing polymerizable compositions constituting the respective microparticle-containing viscoelastic substrates may have identical or different compositions.

Such microparticle-containing polymerizable compositions for the formation of the microparticle-containing viscoelastic substrates may be compositions each comprised of a monomer mixture constituting the base polymer or a partially polymerized prepolymer thereof; and microparticles (fine particles).

When the microparticle-containing polymerizable composition is a pressure-sensitive adhesive composition containing microparticles (microparticle-containing pressure-sensitive adhesive composition), the base polymer may be suitably selected from among pressure-sensitive adhesives (tacky adhesives) such as acrylic pressure-sensitive adhesives, rubber pressure-sensitive adhesives, vinyl alkyl ether pressure-sensitive adhesives, silicone pressure-sensitive adhesives, polyester pressure-sensitive adhesives, polyamide pressure-sensitive adhesives, urethane pressure-sensitive adhesives, fluorine pressure-sensitive adhesives, and epoxy pressure-sensitive adhesives.

Each of these base polymers may be used alone or in combination. Exemplary preferred base polymers are those for use in acrylic pressure-sensitive adhesives. Such acrylic pressure-sensitive adhesives generally contain acrylic polymers as base polymers. Specifically, exemplary preferred microparticle-containing polymerizable compositions for constituting the microparticle-containing viscoelastic substrate include microparticle-containing polymerizable compositions each containing, as a main monomer component, a vinyl monomer for the formation of an acrylic polymer; of which more preferred are microparticle-containing polymerizable compositions each containing a vinyl monomer mixture or a partially polymerized prepolymer thereof, a photoinitiator, microparticles, and a polyfunctional (meth)acrylate. As used herein the term "(meth)acrylate" means "acrylate" and/or "methacrylate", and the other terms are defined in the same manner.

Vinyl monomers for use in microparticle-containing polymerizable compositions are not particularly limited, as long as they have at least one unsaturated double bond and are monomers that can undergo free-radical polymerization (free-radically polymerizable monomers) but are preferably acrylic monomers for their reactivity, of which alkyl (meth) acrylates whose alkyl moiety has two to eighteen carbon atoms are more preferred. Specifically, the vinyl monomer mixture or a partially polymerized prepolymer thereof for use in the microparticle-containing polymerizable composition preferably mainly contains at lest one of acrylic monomers, of which more preferred are alkyl (meth)acrylates whose alkyl moiety has two to eighteen carbon atoms (linear or branched alkyls).

Exemplary alkyl (meth)acrylates whose alkyl moiety has two to eighteen carbon atoms include ethyl (meth) acrylates, n-propyl (meth)acrylates, isopropyl (meth)acrylates, n-butyl (meth)acrylates, sec-butyl (meth)acrylates, t-butyl (meth)acrylates, n-octyl (meth)acrylates, isooctyl (meth)acrylates, 2-ethylhexyl (meth)acrylates, isononyl (meth)acrylates, dodecyl (meth)acrylates, and isostearyl (meth)acrylate. Each of these alkyl (meth)acrylates may be used alone or in combination.

The microparticle-containing polymerizable composition may further contain one or more copolymerizable monomers, in addition to vinyl monomers typified by acrylic monomers. Specifically, the vinyl monomer mixture or a partially polymerized prepolymer thereof contained in the microparticle-containing polymerizable composition may further contain one or more copolymerizable monomers. Exemplary copolymerizable monomers include carboxyl-containing monomers such as acrylic acid, methacrylic acid, carboxyethyl acrylate, carboxypentyl acrylate, itaconic acid, maleic acid, and crotonic acid; hydroxyl-containing monomers such as 2-hydroxyethyl (meth)acrylates, 2-hydroxypropyl (meth)acrylates, 4-hydroxybutyl (meth)acrylates, 6-hydroxyhexyl (meth)acrylates, 8-hydroxyoctyl (meth)acrylates, 10-hydroxydecyl (meth)acrylates, 12-hydroxylauryl (meth)acrylates, and (4-hydroxymethylcyclohexyl)-methyl acrylate; acid anhydride monomers such as maleic anhydride and itaconic anhydride; sulfonate-containing monomers such as 2-acrylamido-2-methylpropanesulfonic acid and sulfopropyl acrylate; phosphate-containing monomers such as 2-hydroxyethylacryloyl phosphate; amide monomers including (meth)acrylamides and N-substituted (meth)acrylamides such as N-methylolacrylamides; succinimide monomers such as N-(meth)acryloyloxymethylenesuccinimides, N-(meth)acryloyl-6-oxyhexamethylenesuccinimides, and N-(meth)acryloyl-8-oxyoctamethylenesuccinimides; vinyl monomers such as vinyl acetate, N-vinylpyrrolidone, N-vinylcarboxamides, styrene, and N-vinylcaprolactam; cyano acrylate monomers such as acrylonitrile and methacrylonitrile; acrylic ester monomers such as glycidyl (meth)acrylates, tetrahydrofurfuryl (meth)acrylates, polyethylene glycol (meth)acrylates, polypropylene glycol (meth)acrylates, fluorine-containing (meth)acrylates, silicon-containing (meth)acrylates, and 2-methoxyethyl acrylate; alkyl (meth)acrylates having other alkyl groups than those of the alkyl (meth)acrylates as the main component, such as methyl (meth)acrylates and nonadecyl (meth)acrylates; alicyclic acrylates such as isobornyl (meth)acrylates. Each of these copolymerizable monomers may be used alone or in combination.

When the vinyl monomer mixture or a partially polymerized prepolymer thereof for constituting the microparticle-containing polymerizable composition contains one or more copolymerizable monomers, it preferably contains 60 to 99.9 percent by weight of vinyl monomers and 0.1 to 40 percent by weight of copolymerizable monomers; more preferably contains 80 to 99.5 percent by weight of vinyl monomers and 0.5 to 20 percent by weight of copolymerizable monomers; and further preferably contains 90 to 99 percent by weight of vinyl monomers and 1 to 10 percent by weight of copolymerizable monomers.

Preferred copolymerizable monomers include hydroxyl-containing monomers and carboxyl-containing monomers, of which acrylic acid is more preferred. The content of copolymerizable monomers in the vinyl monomer mixture or a partially polymerized prepolymer thereof is preferably 1 to 10 percent by weight, for further higher adhesive strength.

The microparticle-containing polymerizable composition may contain polymerization initiators of every kind, such as thermopolymerization initiators and photoinitiators (photopolymerization initiators), of which photoinitiators are preferred for shorter polymerization period.

In an embodiment, a microparticle-containing polymerizable composition containing a polymerization initiator, such as a thermopolymerization initiator or photoinitiator, is used for the preparation of a viscoelastic substrate containing microparticles. This polymerizable composition as containing microparticles can be cured as intact through a curing reaction by the action of heat or active energy rays, to give a viscoelastic substrate containing microparticles. Specifically, this gives a viscoelastic substrate structurally stably containing microparticles. In a preferred embodiment, a photoinitiator is used as the polymerization initiator. In this embodiment, it is preferred to employ a polymerization reaction by the action of active energy rays (photo-curing reaction) to give a viscoelastic substrate structurally stably containing microparticles. Each of such polymerization initiators may be used alone or in combination.

Exemplary photoinitiators for use in the microparticle-containing polymerizable composition include, but are not limited to, benzoin ether photoinitiators, acetophenone photoinitiators, $\alpha$-ketol photoinitiators, aromatic sulfonyl chloride photoinitiators, photoactive oxime photoinitiators, benzoin photoinitiators, benzil photoinitiators, benzophenone photoinitiators, ketal photoinitiators, and thioxanthone photoinitiators.

More specifically, exemplary benzoin ether photoinitiators include benzoin methyl ether, benzoin ethyl ether, benzoin propyl ether, benzoin isopropyl ether, benzoin isobutyl ether, 2,2-dimethoxy-1,2-diphenylethan-1-one, and anisole methyl ether. Exemplary acetophenone photoinitiators include 2,2-diethoxyacetophenone, 2,2-dimethoxy-2-phenylacetophenone, 1-hydroxycyclohexyl phenyl ketone, 4-phenoxydichloroacetophenone, and 4-t-butyl-dichloroacetophenone. Exemplary $\alpha$-ketol photoinitiators include 2-methyl-2-hydroxypropiophenone and 1-[4-(2-hydroxyethyl)-phenyl]-2-hydroxy-2-methylpropan-1-one. Exemplary aromatic sulfonyl chloride photoinitiators include 2-naphthalenesulfonyl chloride. Exemplary photoactive oxime photoinitiators include 1-phenyl-1,1-propanedione-2-(o-ethoxycarbonyl)-oxime. Exemplary benzoin photoinitiators include benzoin. Exemplary benzil photoinitiators include benzil (dibenzoyl). Exemplary benzophenone photoinitiators include benzophenone, benzoylbenzoic acid, 3,3'-dimethyl-4-methoxybenzophenone, polyvinylbenzophenone, and $\alpha$-hydroxycyclohexyl phenyl ketone. Exemplary ketal photoinitiators include benzil dimethyl ketal. Exemplary thioxanthone photoinitiators include thioxanthone, 2-chlorothioxanthone, 2-methylthioxanthone, 2,4-dimethylthioxanthone, isopropylthioxanthone, 2,4-dichlorothioxanthone, 2,4-diethylthioxanthone, 2,4-diisopropylthioxanthone, and dodecylthioxanthone.

The amount of photoinitiators in the microparticle-containing polymerizable composition is not particularly limited and is, for example, 0.001 to 5 parts by weight, preferably 0.01 to 5 parts by weight, and more preferably 0.05 to 3 parts by weight, to 100 parts by weight of total monomer components of the vinyl monomer mixture or a partially polymerized prepolymer thereof in the microparticle-containing polymerizable composition.

Exemplary thermopolymerization initiators for use in the microparticle-containing polymerizable composition include azo thermopolymerization initiators such as 2,2'-azobisisobutyronitrile, 2,2'-azobis-2-methylbutyronitrile, dimethyl 2,2'-azobis(2-methylpropionate), 4,4'-azobis-4-cyanovaleric acid, azobisisovaleronitrile, 2,2'-azobis(2-amidinopropane) dihydrochloride, 2,2'-azobis[2-(5-methyl-2-imidazolin-2-yl)propane] dihydrochloride, 2,2'-azobis(2-methylpropionamidine) disulfate, and 2,2'-azobis(N,N'-dimethyleneisobutylamidine) dihydrochloride; peroxide thermopolymerization initiators such as dibenzoyl peroxide and tert-butyl permaleate; and redox thermopolymerization initiators. The amount of thermopolymerization initiators is not particularly limited, as long as they can act as thermopolymerization initiators.

Exemplary microparticles (fine particles) to be contained in the microparticle-containing viscoelastic substrate include particles of metals such as copper, nickel, aluminum, chromium, iron, and stainless steel, and particles of oxides thereof; particles of carbides such as silicon carbide, boron carbide, and nitrogen carbide; particles of nitrides such as aluminum nitride, silicon nitride, and boron nitride; particles of ceramics represented by oxides such as alumina and zirconia; inorganic microparticles such as calcium carbide, aluminum hydroxide, glass, and silica; naturally-occurring particles such as white sandy loam ("shirasu") and sand; and particles of polymers such as polystyrenes, poly(methyl methacrylate)s, phenol resins, benzoguanamine resins, urea resins, silicone resins, nylons, polyesters, polyurethanes, polyethylenes, polypropylenes, polyamides, and polyimides.

Exemplary microparticles for use in the microparticle-containing viscoelastic substrate also include hollow inorganic microspheres and hollow organic microspheres. Specifically, exemplary hollow inorganic microspheres include hollow balloons made of glass, such as hollow glass balloons; hollow balloons made of metallic compounds, such as hollow alumina balloons; and hollow balloons made of ceramics and porcelain, such as hollow ceramic balloons. Exemplary hollow organic microspheres include hollow balloons made from resins, such as hollow acrylic resin balloons and hollow poly(vinylidene chloride) balloons.

Exemplary commercially available hollow glass balloons include products supplied by Fuji Silysia Chemical Ltd. under the trade name of "Fuji Balloon" (glass microbaloon); products supplied by Tokai Kogyo Co., Ltd. under the trade names of "CEL-STAR Z-25", "CEL-STAR Z-27", "CEL-STAR CZ-31T", "CEL-STAR Z-36", "CEL-STAR Z-39", "CEL-STAR T-36", "CEL-STAR SX-39", and "CEL-STAR PZ-6000"; and products supplied by Fine Balloon Limited-liability Company under the trade name of "Silax Fine Balloon".

Exemplary microparticles for use in the microparticle-containing viscoelastic substrate further include solid (non-hollow) glass balloons. Exemplary commercially available solid glass balloons include products supplied by Asahi Glass Co., Ltd. under the trade name of "SUNSPHERE NP-100"; and products supplied by Potters-Ballotini Co., Ltd. under the trade names of "Micro Glass Beads EMB-20" and "Glass Beads EGB-210".

Of the microparticles, preferred are hollow inorganic microparticles, of which hollow glass balloons are more preferred, from the viewpoints of the weight of the component and the polymerization efficiency by the application of active energy rays typified by ultraviolet rays. Use of hollow glass balloons helps to improve adhesive strength at high temperatures without adversely affecting other characteristic properties such as shear force and holding power (shear adhesion). Each of different types of microparticles may be used alone or in combination. Such microparticles may have been subjected to surface treatments such as treatments for reducing surface tension typically with silicone compounds or fluorine compounds.

The particle diameter (average particle diameter) of microparticles is not particularly limited and may be selected within ranges of, for example, 1 to 500 $\mu$m, preferably 5 to 200 $\mu$m, more preferably 10 to 100 $\mu$m, and further preferably 30 to 100 $\mu$m.

The specific gravity (true density) of the microparticles is not particularly limited and may be selected within ranges of, for example, 0.01 to 1.8 g/cm$^3$, and preferably 0.02 to 1.5 g/cm$^3$. Microparticles having a specific gravity less than 0.01 g/cm$^3$ may not be uniformly dispersed in the microparticle-containing polymerizable composition, because they may undesirably float upon mixing with other components. Additionally, they may have insufficient strength and undergo breakage. In contrast, microparticles having a specific gravity more than 1.8 g/cm$^3$ may have insufficient transmittance with respect to active energy rays typified by ultraviolet rays, and this may impair the efficiency in a photo-curing reaction. In addition, this may impair the workability, because the heat-expandable/peelable acrylic pressure-sensitive adhesive tape may have an increased weight. If used as the microparticles, the true density of hollow inorganic microparticles is preferably 0.1 to 0.6 g/cm$^3$; and that of hollow organic microparticles is preferably 0.01 to 0.05 g/cm$^3$.

The amount of the microparticles in the polymerizable composition is not particularly limited and may be set within such ranges that the amount of the microparticles in the microparticle-containing viscoelastic substrate is, for example, 5 to 50 percent by volume, preferably 10 to 45 percent by volume, and more preferably 15 to 40 percent by volume, based on the total volume of the microparticle-containing viscoelastic substrate formed from the microparticle-containing polymerizable composition. If the amount of microparticles in the viscoelastic substrate is less than 5 percent by volume, the advantages of microparticles may not be exhibited sufficiently. If it is more than 50 percent by volume, the substrate may have insufficient viscoelasticity.

Polyfunctional (meth)acrylates for use in the microparticle-containing polymerizable composition can be any compounds each having at least two (meth)acryloyl groups.

Exemplary polyfunctional (meth)acrylates include trimethylolpropane tri(meth)acrylates, tetramethylolmethane tetraacrylate, pentaerythritol di(meth)acrylates, pentaerythritol tri(meth)acrylates, pentaerythritol tetra(meth)acrylates, 1,2-ethylene glycol di(meth)acrylates, 1,4-butylene glycol di(meth)acrylates, 1,6-hexanediol di(meth)acrylates, 1,12-dodecanediol di(meth)acrylates, dipentaerythritol monohydroxypenta(meth)acrylates, dipentaerythritol hexa(meth)acrylates, polyethylene glycol di(meth)acrylates, hexanediol di(meth)acrylates, (poly)ethylene glycol di(meth)acrylates, (poly)propylene glycol di(meth)acrylates, neopentyl glycol di(meth)acrylates, tetramethylolmethane tri(meth)acrylates, allyl (meth)acrylates, vinyl (meth)acrylates, epoxy acrylates, polyester acrylates, urethane acrylates; and reactive hyperbranched polymers each having two or more terminal (meth)acryloyl groups, such as products supplied by Sartomer Company, Inc. under the trade names of "CN2300", "CN2301", and "CN2320". Each of such polyfunctional (meth)acrylates may be used alone or in combination. As used herein the term "(meth)acryloyl group" means "acryloyl group" and/or "methacryloyl group", and hereinafter the same.

The amount of polyfunctional (meth)acrylates in the microparticle-containing polymerizable composition is preferably such that the solvent-insoluble content of a microparticle-containing viscoelastic substrate formed from the microparticle-containing polymerizable composition is, for example, 45 to 99 percent by weight, and preferably 50 to 95 percent by weight. A microparticle-containing viscoelastic substrate having a solvent-insoluble content of less than 45 percent by weight may have insufficient cohesive force and may fail to prevent occurrence of expansion or foaming. In contrast, a microparticle-containing viscoelastic substrate having a solvent-insoluble content of more than 99 percent by weight may have insufficient flexibility, and this may adversely affect the viscoelasticity and external appearance.

As used herein the "solvent-insoluble content" of a microparticle-containing viscoelastic substrate refers to a "proportion of solvent-insoluble components" in the microparticle-containing viscoelastic substrate and is determined according to the following "technique of measuring the solvent-insoluble content of a microparticle-containing viscoelastic substrate". The solvent insoluble components of the microparticle-containing viscoelastic substrate also include microparticles that are insoluble in solvents.

The solvent-insoluble content of a microparticle-containing viscoelastic substrate may be determined in the following manner. About 1 g of the microparticle-containing viscoelastic substrate is sampled and precisely weighed to determine the weight of the microparticle-containing viscoelastic substrate before immersion. Next, this sample is immersed in about 40 g of ethyl acetate for 7 days, and all components insoluble in ethyl acetate are recovered, dried at 130°C for 2 hours, and the dry weight of the insoluble components is determined. The determined dry weight is substituted into the following equation to determine the solvent-insoluble content.

$$\text{Solvent-insoluble content (\%) of microparticle-containing viscoelastic substrate} = [(\text{Dry weight of insoluble components})/(\text{Weight of the microparticle-containing viscoelastic substrate before immersion})] \times 100$$

The polyfunctional (meth)acrylates are used in the microparticle-containing polymerizable composition in such an amount that the solvent-insoluble content of the microparticle-containing viscoelastic substrate falls within the above-specified range, as has been described above. While varying depending on its molecular weight and number of functional groups, the specific amount of the polyfunctional (meth)acrylates is generally 0.001 to 5 parts by weight, preferably 0.001 to 3 parts by weight, and more preferably 0.01 to 2 parts by weight, to 100 parts by weight of total monomer components of the vinyl monomer mixture or a partially polymerized prepolymer thereof in the microparticle-containing polymerizable composition. If the amount is more than 5 parts by weight, the resulting heat-expandable/peelable acrylic pressure-sensitive adhesive tape may exhibit insufficient cohesive force and show insufficient adhesion (tack strength). In contrast, if the amount is excessively small (e.g., if it is less than 0.001 parts by weight), the resulting heat-expandable/peelable acrylic pressure-sensitive adhesive tape may show insufficient cohesive force.

For better handleability, the microparticle-containing polymerizable composition is preferably adjusted to have a suitable viscosity for coating. Specifically, the viscosity is generally preferably 0.3 to 40 Pa.s in terms of viscosity measured with a Brookfield viscometer at a measurement temperature of 25°C. To have such a suitable viscosity, a vinyl monomer mixture may have been prepolymerized to give a partially polymerized prepolymer in the microparticle-containing polymerizable composition. Specifically, the microparticle-containing polymerizable composition may contain a partially polymerized prepolymer of the vinyl monomer mixture.

While varying depending on the molecular weight of a partially polymerized moiety, the degree of polymerization of partially polymerized prepolymers of the vinyl monomer mixture is about 2 to 40 percent by weight and preferably about 5 to 20 percent by weight. The partial polymerization is generally conducted by the application of active energy rays typified by ultraviolet rays while avoiding contact with oxygen.

The degree of polymerization of a partially polymerized prepolymer may be determined in the following manner. Initially, about 0.5 g of the partially polymerized prepolymer is precisely weighed, this is dried at 130°C for 2 hours, and the weight of the dried prepolymer is precisely weighed to give a weight loss [volatile content (weight of unreacted monomers)], and the weight loss is substituted into the following equation:

$$\text{Degree of polymerization (\%) of the partially polymerized prepolymer} = [1-(\text{Weight loss})/(\text{Weight of partially polymerized prepolymer before drying})] \times 100$$

The viscosity of the microparticle-containing polymerizable composition may also be adjusted by suitably adding a polymer as a thickener. Exemplary polymers as thickeners include acrylic polymers as copolymers of the alkyl (meth) acrylates typically with acrylic acid, acrylamide, acrylonitrile, or acryloylmorpholine; styrene-butadiene rubbers (SBR); isoprene rubbers; styrene-butadiene block copolymers (SBS); ethylene-vinyl acetate copolymers; acrylic rubbers; polyurethanes; and polyesters. Each of different polymers as thickeners may be used alone or in combination.

The amount of polymers as thickeners may be 40 percent by weight or less, and, for example, 5 to 40 percent by weight based on the total weight of the microparticle-containing polymerizable composition.

The microparticle-containing viscoelastic substrate may contain bubbles (foams). The way how bubbles are formed is not particularly limited and includes, for example, (1) the way in which a microparticle-containing viscoelastic substrate is formed from a microparticle-containing pressure-sensitive adhesive composition further containing a gaseous component for the formation of bubbles (the gaseous component is hereinafter also referred to as "bubble-constituting gas") (this composition is hereinafter also referred to as "bubble-bearing microparticle-containing polymerizable composition") and thus contains bubbles, and (2) the way in which a microparticle-containing viscoelastic substrate is formed from a microparticle-containing pressure-sensitive adhesive composition containing a blowing agent and thus contains bubbles. In a microparticle-containing viscoelastic substrate further containing bubbles (hereinafter also referred to as "bubble-bearing microparticle-containing viscoelastic substrate") for use herein, the bubbles are preferably formed by the way (1). Exemplary blowing agents include, but are not limited to, known blowing agents such as heat-expandable microspheres.

The amount of bubbles contained in a bubble-bearing microparticle-containing viscoelastic substrate is not particularly limited and may be suitably set according typically to the purpose of use. Typically, the amount is 5 to 40 percent by volume, and preferably 8 to 30 percent by volume, based on the total volume of the bubble-bearing microparticle-containing viscoelastic substrate. If the amount is less than 5 percent by volume, bubbles may not sufficiently exhibit their advantages. In contrast, if it exceeds 40 percent by volume, the bubble-bearing microparticle-containing viscoelastic substrate may contain open cells (open bubbles) penetrating the substrate, and this may impair the adhesiveness and external appearance of the tape.

Bubbles for use in the bubble-bearing microparticle-containing viscoelastic substrate are preferably basically closed cells, but they may be a mixture of closed cells and semi-closed cells.

The bubbles are generally spheroidal, and preferably spherical, but they may be irregular spheroidal. The average diameter of the bubbles is not particularly limited and may be set within ranges of, for example, 1 to 1000 $\mu$m, preferably 10 to 500 $\mu$m, and more preferably 30 to 300 $\mu$m.

Exemplary bubble components (gaseous components constituting bubbles; bubble-constituting gases) in the bubbles include, but are not limited to, inactive gases such as nitrogen, carbon dioxide, and argon gases; and other various gaseous components such as air. When a bubble-constituting gas is incorporated into the polymerizable composition typically before carrying out a polymerization reaction, the bubble-constituting gas should be one that does not adversely affect the reaction. Nitrogen is preferably used as the bubble-constituting gas, because it does not adversely affect such reactions and low in cost.

The bubble-bearing microparticle-containing polymerizable composition may further contain a surfactant to bear or contain fine bubbles stably. Exemplary surfactants include hydrocarbon surfactants, silicon surfactants, and fluorochemical surfactants. Among them, fluorochemical surfactants are preferred, of which fluorochemical surfactants containing fluorocarbon polymers having a weight-average molecular weight of 20000 or more are more preferred.

Specifically, in a preferred embodiment, such a fluorochemical surfactant containing a fluorocarbon polymer having a weight-average molecular weight of 20000 or more is used to help the bubble-bearing microparticle-containing polymerizable composition to bear sufficient amounts of bubbles stably. This is probably because the large weight-average molecular weight of 20000 or more of the fluorocarbon polymer constituting the fluorochemical surfactant increases the film strength of formed bubbles, thus the composition can bear a larger amount of bubbles and the formed bubbles become more stable to suppress coalescence of bubbles.

In this preferred embodiment, the weight-average molecular weight of the fluorocarbon polymer in the fluorochemical surfactant is not particularly limited, as long as it is 20000 or more, and may be set within ranges of, for example, 20000 to 100000, preferably 22000 to 80000, and more preferably 24000 to 60000. A fluorocarbon polymer having a weight-average molecular weight of less than 20000, if used in the fluorochemical surfactant in the polymerizable composition, may not effectively help the composition to bear sufficient amounts of bubbles stably. Additionally, the fluorocarbon polymer of this type may not effectively prevent bubbles, even if borne in the bubble-bearing microparticle-containing polymerizable composition, from coalescence during the interval between the incorporation (mixing) of bubbles in the composition and the formation of a bubble-bearing microparticle-containing viscoelastic substrate from the composition. The resulting bubble-bearing microparticle-containing viscoelastic substrate will bear insufficient amounts of bubbles and/or will contain holes (open holes) penetrating the substrate.

Each of different fluorocarbon polymers may be used alone or in combination.

The fluorocarbon polymers each contain at least a monomer having a fluorine-containing group (hereinafter also referred to as "fluorine-containing monomer") as a monomer component. Each of different fluorine-containing monomers may be used alone or in combination.

Exemplary preferred fluorine-containing monomers include vinyl monomers each having a fluorine-containing group. Preferred fluorine-containing groups in vinyl monomers having fluorine-containing groups include perfluoro groups. The perfluoro groups may be monovalent or polyvalent (e.g., divalent or higher). Exemplary preferred monovalent fluorine-containing groups (typified by perfluoro groups) include perfluoroalkyl groups such as $CF_3CF_2$ group and $CF_3CF_2CF_2$ group. The perfluoroalkyl groups may be bound to a vinyl monomer through another group such as -O- group, -OCO- group, or alkylene group. Specifically, the monovalent fluorine-containing group may be in the form typically of a perfluoro ether group (e.g., a perfluoroalkyl-oxy group) or a perfluoro ester group (e.g., a perfluoroalkyl-oxycarbonyl group or a perfluoroalkyl-carbonyloxy group). Exemplary perfluoro ether groups include $CF_3CF_2O$ group and $CF_3CF_2CF_2O$ group. Exemplary perfluoro ester groups include $CF_3CF_2OCO$ group, $CF_3CF_2CF_2OCO$ group, $CF_3CF_2COO$ group, and $CF_3CF_2CF_2COO$ group.

Of polyvalent fluorine-containing groups, exemplary divalent fluorine-containing groups include perfluoroalkylene groups corresponding to the above-mentioned perfluoroalkyl groups, such as tetrafluoroethylene group and hexafluoropropylene group. The perfluoroalkylene groups may be bound to a principle chain (of the vinyl monomer) through another group, as in the perfluoroalkyl groups. Exemplary other groups include -O- group, -OCO-group, and alkylene groups. Typically, the perfluoroalkylene groups may be in the forms typically of perfluoroalkylene-oxy groups such as tetrafluoroethylene-oxy group and hexafluoropropylene-oxy group; and perfluoroalkylene-oxycarbonyl groups such as tetrafluoroethylene-oxycarbonyl group and hexafluoropropylene-oxycarbonyl group.

The number of carbon atoms in the perfluoro moiety of the fluorine-containing group (e.g., a perfluoroalkyl group or a perfluoroalkylene group) is not particularly limited, and may be, for example, 1 or more, preferably 3 to 30, and more preferably 4 to 20.

Exemplary preferred vinyl monomers having a fluorine-containing group include (meth)acrylic esters each having a fluorine-containing group, of which perfluoroalkyl (meth)acrylates are more preferred. Exemplary perfluoroalkyl (meth)acrylates include perfluoroalkyl (meth)acrylates whose alkyl moiety has one to twenty carbon atoms, such as perfluoromethyl (meth)acrylates, perfluoroethyl (meth)acrylates, perfluoropropyl (meth)acrylates, perfluoroisopropyl (meth)acrylates, perfluorobutyl (meth)acrylates, perfluoroisobutyl (meth)acrylates, perfluoro-sec-butyl (meth)acrylates, perfluoro-tert-butyl (meth)acrylates, perfluoropentyl (meth)acrylates, perfluorohexyl (meth)acrylates, perfluoroheptyl (meth)acrylates, and perfluorooctyl (meth)acrylates.

A fluorocarbon polymer for use herein may further contain, as monomer components, a monomer component copolymerizable with a fluorine-containing monomer (hereinafter also referred to as "non-fluorine monomer"), in addition to the fluorine-containing monomer. Each of such non-fluorine monomers may be used alone or in combination.

Typically, when the fluorine-containing monomer is a vinyl monomer having a fluorine-containing group [typified by a (meth)acrylic ester having a fluorine-containing group], (meth)acrylic esters are preferred as the non-fluorine monomers, of which alkyl (meth)acrylates are more preferred. Exemplary alkyl (meth)acrylates include alkyl (meth)acrylates whose alkyl moiety has one to twenty carbon atoms, such as methyl (meth)acrylates, ethyl (meth)acrylates, propyl (meth)acrylates, isopropyl (meth)acrylates, butyl (meth)acrylates, isobutyl (meth)acrylates, s-butyl (meth)acrylates, t-butyl (meth)acrylates, pentyl (meth)acrylates, hexyl (meth)acrylates, heptyl (meth)acrylates, octyl (meth)acrylates, 2-ethylhexyl (meth)acrylates, isooctyl (meth)acrylates, nonyl (meth)acrylates, isononyl (meth)acrylates, decyl (meth)acrylates, isodecyl (meth)acrylates, undecyl (meth)acrylates, dodecyl (meth)acrylates, tridecyl (meth)acrylates, tetradecyl (meth) acrylates, pentadecyl (meth)acrylates, hexadecyl (meth)acrylates, heptadecyl (meth)acrylates, octadecyl (meth)acrylates, nonadecyl (meth)acrylates, and icosyl (meth)acrylates, of which alkyl (meth)acrylates whose alkyl moiety has four to eighteen carbon atoms are preferred.

Exemplary (meth)acrylic esters other than alkyl (meth)acrylates include (meth)acrylic esters of alicyclic hydrocarbons, such as cyclopentyl (meth)acrylates, cyclohexyl (meth)acrylates, and isobornyl (meth)acrylates; and (meth) acrylic esters of aromatic hydrocarbons, such as phenyl (meth)acrylates.

Exemplary non-fluorine monomers also include carboxyl-containing monomers such as (meth)acrylic acid, itaconic acid, maleic acid, fumaric acid, crotonic acid, and isocrotonic acid, and anhydrides thereof; sulfonate-containing monomers such as sodium vinylsulfonate; aromatic vinyl compounds such as styrene and vinyltoluene; cyano-containing monomers such as acrylonitrile and methacrylonitrile; olefins and dienes such as ethylene, butadiene, isoprene, and isobutylene; vinyl esters such as vinyl acetate; vinyl ethers such as vinyl alkyl ethers; vinyl chloride; amido-containing monomers such as acrylamide, methacrylamide, N-vinylpyrrolidone, N,N-dimethyl (meth)acrylamides, N-methylol (meth) acrylamides, N-methoxymethyl (meth)acrylamides, and N-butoxymethyl (meth)acrylamides; hydroxyl-containing monomers including hydroxyalkyl (meth)acrylates such as hydroxyethyl (meth)acrylates, hydroxypropyl (meth)acrylates, and hydroxybutyl (meth)acrylates; amino-containing monomers such as aminoethyl (meth)acrylates, dimethylaminoethyl (meth)acrylates, t-butylaminoethyl (meth)acrylates, and (meth)acryloylmorpholine; imido-containing monomers such as cyclohexylmaleimide and isopropylmaleimide; glycidyl-containing monomers such as glycidyl (meth)acrylates and methylglycidyl (meth)acrylates; isocyanato-containing monomers such as 2-methacryloyloxyethyl isocyanate. Exemplary non-fluorine monomers further include polyfunctional copolymerizable monomers (polyfunctional monomers) such as triethylene glycol di(meth)acrylates, diethylene glycol di(meth)acrylates, ethylene glycol di(meth)acrylates, tetraethylene glycol di(meth)acrylates, neopentyl glycol di(meth)acrylates, 1,6-hexanediol di(meth)acrylates, trimethylolpropane tri(meth) acrylates, pentaerythritol tri(meth)acrylates, dipentaerythritol hexa(meth)acrylates, and divinylbenzene.

Exemplary preferred fluorochemical surfactants for use herein include fluorochemical surfactants containing fluorocarbon polymers including, as monomer components, at least vinyl monomers having a fluorine-containing group, of which those including (meth)acrylic esters having a fluorine-containing group as monomer components are more preferred. Among them, further preferred are fluorochemical surfactants containing fluorocarbon polymers including, as monomer components, a vinyl monomer having a fluorine-containing group in combination with a (meth)acrylic ester, of which those including, as monomer components, a (meth)acrylic ester having a fluorine-containing group in combination with an alkyl (meth)acrylate are especially preferred. In the fluorocarbon polymers constituting fluorochemical surfactants, the content of vinyl monomers having a fluorine-containing group, typified by (meth)acrylic esters having a fluorine-containing group, is not particularly limited and may be suitably set according to target characteristic properties of the surfactants.

Specific exemplary fluorochemical surfactants include commercially available products supplied by JEMCO Inc. under the trade names of "EFTOP EF-352" and "EFTOP EF-801"; and those supplied by Daikin Industries, Ltd. under the trade name of "Unidyne TG-656".

The amount (in terms of solids content) of fluorochemical surfactants is not particularly limited and may be set within ranges of, for example, 0.01 to 2 parts by weight, preferably 0.03 to 1.5 parts by weight, and more preferably 0.05 to 1 part by weight, to 100 parts by weight of total monomer components of the bubble-bearing microparticle-containing polymerizable composition. Fluorochemical surfactants in an amount of less than 0.01 part by weight to 100 parts by weight of total monomer components of the bubble-bearing microparticle-containing polymerizable composition may not effectively help the polymerizable composition to bear sufficient amounts of bubbles. In contrast, fluorochemical surfactants in an amount of more than 2 parts by weight may adversely affect the adhesiveness.

For allowing a bubble-bearing microparticle-containing polymerizable composition to bear bubbles stably to form a bubble-bearing microparticle-containing viscoelastic substrate, bubbles are preferably incorporated as a last component into the bubble-bearing microparticle-containing polymerizable composition. It is more preferred that the microparticle-containing polymerizable composition before bearing bubbles (hereinafter also referred to as "microparticle-containing viscoelastic precursor") has a high viscosity. The viscosity of the microparticle-containing viscoelastic precursor is not particularly limited, as long as sufficient amounts of bubbles can be held in the resulting composition stably. Typically, the viscosity is preferably 5 to 50 Pa.s, and more preferably 10 to 40 Pa.s, as measured with a Model BH viscometer using a No. 5 rotor at a number of revolutions of 10 rpm and a measurement temperature of 30°C. A microparticle-containing viscoelastic precursor having a low viscosity (Model BH viscometer, No. 5 rotor, 10 rpm, 30°C) of less than 5 Pa.s may not satisfactorily bear bubbles, because incorporated bubbles immediately undergo coalescence to escape out of the system. In contrast, a microparticle-containing viscoelastic precursor having an excessively high viscosity of more than 50 Pa.s may be difficult to bear sufficient amounts of bubbles to give a bubble-bearing microparticle-containing viscoelastic substrate.

The viscosity of the microparticle-containing viscoelastic precursor may be adjusted, for example, by incorporating various polymer components such as acrylic rubbers and thickening additives; or by partially polymerizing a vinyl monomer mixture as a component of the precursor. Specifically, a microparticle-containing viscoelastic precursor having a suitable viscosity for stably bearing and holding bubbles may be obtained by mixing one or more vinyl monomers and a polymerization initiator (e.g., a photoinitiator) to give a monomer mixture; carrying out a polymerization reaction of the monomer mixture corresponding to the type of the polymerization initiator to give a composition (syrup) in which only part of monomer components are polymerized; and adding to the syrup a fluorochemical surfactant containing a fluorocarbon polymer with a weight-average molecular weight of 20000 or more, and other components used according to necessity, such as microparticles and additives. Such a fluorochemical surfactant containing a fluorocarbon polymer with a weight-average molecular weight of 20000 or more, and other components added according to necessity, such as microparticles and additives, may be previously incorporated into the vinyl monomer mixture before the preparation of the syrup.

The way to incorporate bubbles into the precursor is not particularly limited, and a known technique for mixing or blending bubbles into such compositions can be employed. An exemplary device for use herein is one that includes a disc having a through hole at the center part, a stator having a multiplicity of fine teeth and arranged on the disc, and a rotor facing the stator, having a multiplicity of fine teeth, and arranged on the disc. Using this device, the microparticle-containing viscoelastic precursor is introduced in between the teeth of the stator and the teeth of the rotor, and a gaseous component for constituting bubbles (bubble-constituting gas) is introduced through the through hole into the microparticle-containing viscoelastic precursor to allow the bubble-constituting gas to be finely divided and dispersed into the microparticle-containing viscoelastic precursor, to give a microparticle-containing polymerizable composition bearing finely dispersed bubbles.

To suppress or prevent coalescence of bubbles, it is desirable to carry out the steps from the mixing of bubbles to the formation of the bubble-bearing microparticle-containing viscoelastic substrate continuously as a series of steps. Specifically, it is desirable that a bubble-bearing microparticle-containing polymerizable composition is prepared by blending bubbles as mentioned above, and the bubble-bearing microparticle-containing polymerizable composition is immediately used for the formation of a bubble-bearing microparticle-containing viscoelastic substrate typically according to the following method of forming a substrate.

A bubble-bearing microparticle-containing polymerizable composition of this configuration is resistant to coalescence of bubbles and thus stably contains sufficient amounts of bubbles. Thus, the bubble-bearing microparticle-containing polymerizable composition can be used as a composition for the formation of a substrate bearing bubbles (hereinafter also referred to as "bubble-bearing substrate") in pressure-sensitive adhesive tapes or sheets, by suitably selecting components constituting the composition, such as the vinyl monomer mixture or a partially polymerized prepolymer thereof, photoinitiator, microparticles, polyfunctional (meth)acrylates, and additives.

The microparticle-containing pressure-sensitive adhesive composition for the formation of the microparticle-containing viscoelastic substrate may further contain suitable additives according to the purpose, in addition to the above components. Exemplary additives include crosslinking agents such as polyisocyanate crosslinking agents, silicone crosslinking agents, epoxy crosslinking agents, and alkyl-etherified melamine crosslinking agents; tackifiers including tackifiers that are solid, semi-solid, or liquid at room temperature and comprised typically of rosin derivative resins, polyterpene resins, petroleum resins, or oil-soluble phenol resins; plasticizers; fillers; age inhibitors; antioxidants; colorants such as pigments and dyestuffs; and softeners.

The way to prepare a microparticle-containing viscoelastic substrate is not particularly limited. Typically, the substrate may be prepared by applying a microparticle-containing polymerizable composition to a suitable support such as a separator or base to give a layer of microparticle-containing polymerizable composition; and subjecting the layer to drying and/or curing (e.g., curing by the application of heat or active energy rays) according to necessity. When curing by the application of active energy rays (photocuring) is conducted, it is desirable to block oxygen typically by affixing a suitable support such as a separator or base onto the layer or carrying out photocuring in an atmosphere of nitrogen gas, because oxygen in the air may adversely affect the photopolymerization reaction. The support used in the preparation of the microparticle-containing viscoelastic substrate may be removed during an adequate step in the preparation of a heat-expandable/peelable acrylic pressure-sensitive adhesive tape or may be removed upon use of the prepared heat-expandable/peelable acrylic pressure-sensitive adhesive tape.

The thickness of the microparticle-containing viscoelastic substrate is not particularly limited, but, from the viewpoint of viscoelasticity, it is generally 100 $\mu$m or more (e.g., 100 to 1500 $\mu$m), preferably 200 $\mu$m or more (e.g., 200 to 1400 $\mu$m), and more preferably 300 $\mu$m or more (e.g., 300 $\mu$m to 1300 $\mu$m). Two or more microparticle-containing viscoelastic substrates, if included in a tape or sheet, may have identical or different thicknesses. Each of such microparticle-containing viscoelastic substrates may have a single-layer structure or a multilayer structure.

Blowing Agent-Containing Pressure-Sensitive Adhesive Layer

The pressure-sensitive adhesive layer containing a blowing agent (heat-blowing agent) can be any layer composed of an acrylic pressure-sensitive adhesive containing a blowing agent. It generally contains an acrylic polymer as a base polymer. The base polymer of the blowing agent-containing pressure-sensitive adhesive layer may be identical to or different from the base polymer of the microparticle-containing viscoelastic substrate in heat-expandable/peelable acrylic pressure-sensitive adhesive tapes.

The heat-expandable/peelable acrylic pressure-sensitive adhesive tapes according to embodiments of the present invention include a blowing agent in the pressure-sensitive adhesive layer, are thereby capable of separating or debonding by expansion or foaming of the blowing agent as a result of heating. Typically, they are capable of debonding at the interface between an adherend and the blowing agent-containing pressure-sensitive adhesive layer or at the interface between the peelable or peel-assisting film layer and the blowing agent-containing pressure-sensitive adhesive layer. In some embodiments, heat-expandable/peelable acrylic pressure-sensitive adhesive tapes are capable of exhibiting good adhesiveness to the adherend and are also capable of easily peeling from the adherend upon heating.

This is because the blowing agent in the pressure-sensitive adhesive layer generally expand or foam as a result of heating, the blowing agent-containing pressure-sensitive adhesive layer thereby expands and deforms unevenly, and this enables the tape to separate or debond typically by peeling at the interface between the adherend and the blowing agent-containing pressure-sensitive adhesive layer or at the interface between the peelable or peel-assisting film layer and the blowing agent-containing pressure-sensitive adhesive layer.

When the blowing agent-containing pressure-sensitive adhesive layer is affixed to an adherend composed of some type of materials, the adhesive layer may have a reduced adhesive strength or lose its adhesive strength to cause peeling at the interface between the adherend and the blowing agent-containing pressure-sensitive adhesive layer due to expansion and deformation of the blowing agent-containing pressure-sensitive adhesive layer accompanied with expansion and/or foaming of the blowing agent in the pressure-sensitive adhesive layer upon heating.

The heating may be conducted using a suitable heating device such as a hot plate, a hot air dryer (air forced oven), a near-infrared lamp, or an air dryer. The heating temperature has only to be equal to or higher than the foaming (expanding) initiating temperature of the blowing agent and may be suitably set according typically to the surface condition of the adherend, the type of the blowing agent, the thermal stability typically of the adherend, and the way to carry out the heating (e.g., heat capacity and heating device or procedure). In general, the heating is carried out at a temperature of 100°C to 250°C, for 5 to 90 seconds typically using a hot plate, or for 5 to 15 minutes typically using a hot air dryer (air forced oven).

When an exothermic film that generates heat upon application of current is used as a peelable or peel-assisting film constituting the peelable or peel-assisting film layer, exemplary heating procedures also include heat generation by directly applying current to the exothermic film, and heat generation due to electromagnetic induction heating using high-frequency waves, in addition to the above-mentioned heating procedures. As used herein the "induction heating" refers to a heating procedure in which a high-frequency alternating current is applied to a heating coil to generate an alternating magnetic field; lines of magnetic force passing through a conductive article causes an eddy current in the conductive article placed in the alternating magnetic field; and the eddy current yields a Joule's heat to heat the conductive article. With an increasing frequency of the alternating current applied to the coil, the magnetic field alters more rapidly and the eddy current induced therefrom increases to thereby shorten the heating duration (heating time).

In the case of the heat generation by directly applying current to the exothermic film or the heat generation due to high-frequency induction heating, the heating conditions may be generally set so that heating at a temperature of about 100°C to 200°C for about 1 to 10 minutes can be achieved.

In an embodiment, an exothermic film that generates heat upon application of current is used as a film constituting the peelable or peel-assisting film layer, and the heating is conducted through heat generation by directly applying current to the exothermic film or by heat generation due to high-frequency induction heating. According to this embodiment, the heat-expandable/peelable acrylic pressure-sensitive adhesive tape affixed to an adherend, such as a part or member, can be easily separated or debonded without heating the entire adherend including the bonded part. Accordingly, the adherend itself, such as a part or member, is not heated, thereby suffers from no deterioration due to heat, and is reusable. In addition, an apparatus for peeling can have a reduced size.

Exemplary preferred blowing agent-containing pressure-sensitive adhesive compositions for constituting the blowing agent-containing pressure-sensitive adhesive layer include blowing agent-containing acrylic pressure-sensitive adhesive compositions containing an acrylic monomer as a main monomer component. When the microparticle-containing polymerizable composition contains an acrylic monomer as a main monomer component, preferred is a blowing agent-containing pressure-sensitive adhesive composition having a composition corresponding to that of the microparticle-containing polymerizable composition, except for including the blowing agent but excluding the microparticles, from the viewpoints typically of workability and cost. As used herein a "pressure-sensitive adhesive composition" also includes a "composition for the formation of a pressure-sensitive adhesive".

In a preferred embodiment, the microparticle-containing polymerizable composition is a microparticle-containing polymerizable composition containing at least a vinyl monomer mixture or a partially polymerized prepolymer thereof, a photoinitiator, and a polyfunctional (meth)acrylate. In this embodiment, the blowing agent-containing pressure-sensitive adhesive composition is preferably a blowing agent-containing pressure-sensitive adhesive composition including at least a vinyl monomer mixture or a partially polymerized prepolymer thereof, a photoinitiator, a polyfunctional (meth) acrylate, and a blowing agent.

Vinyl monomers for use in the blowing agent-containing pressure-sensitive adhesive composition can be any monomers having an unsaturated double bond and capable of undergoing free-radical polymerization (free-radically polymerizable monomers). Among them, acrylic monomers are preferred for satisfactory reactivity, of which alkyl (meth) acrylates each having an alkyl moiety containing two to eighteen carbon atoms are more preferred. Specifically, the vinyl monomer mixture or a partially polymerized prepolymer thereof for use in the blowing agent-containing pressure-sensitive adhesive composition preferably mainly contains an acrylic monomer and more preferably mainly contains an alkyl (meth)acrylate having an alkyl moiety containing two to eighteen carbon atoms (linear or branched alkyl moiety).

Exemplary alkyl (meth)acrylates each having an alkyl moiety containing two to eighteen carbon atoms include ethyl (meth)acrylates, n-propyl (meth)acrylates, isopropyl (meth)acrylates, n-butyl (meth)acrylates, sec-butyl (meth)acrylates, t-butyl (meth)acrylates, n-octyl (meth)acrylates, isooctyl (meth)acrylates, 2-ethylhexyl (meth)acrylates, isononyl (meth)acrylates, dodecyl (meth)acrylates, and isostearyl (meth)acrylates. Each of different alkyl (meth)acrylates may be used alone or in combination.

The blowing agent-containing pressure-sensitive adhesive composition may further contain one or more copolymerizable monomers, in addition to a vinyl monomer typified by acrylic monomer. Specifically, the vinyl monomer mixture or a partially polymerized prepolymer thereof in the blowing agent-containing pressure-sensitive adhesive composition may further contain one or more copolymerizable monomers.

Exemplary copolymerizable monomers for use in the blowing agent-containing pressure-sensitive adhesive composition for the formation of a blowing agent-containing pressure-sensitive adhesive composition layer include carboxyl-containing monomers such as acrylic acid, methacrylic acid, carboxyethyl acrylate, carboxypentyl acrylate, itaconic acid, maleic acid, and crotonic acid; hydroxyl-containing monomers such as 2-hydroxyethyl (meth)acrylates, 2-hydroxypropyl (meth)acrylates, 4-hydroxybutyl (meth)acrylates, 6-hydroxyhexyl (meth)acrylates, 8-hydroxyoctyl (meth)acrylates, 10-hydroxydecyl (meth)acrylates, 12-hydroxylauryl (meth)acrylates, and (4-hydroxymethylcyclohexyl)-methyl acrylate; acid anhydride monomers such as maleic anhydride and itaconic anhydride; sulfonate-containing monomers such as 2-acrylamide-2-methylpropanesulfonic acid and sulfopropyl acrylate; phosphate-containing monomers such as 2-hydroxyethylacryloyl phosphate; amide monomers including (meth)acrylamides and N-substituted (meth)acrylamides such as N-methylolacrylamide; succinimide monomers such as N-(meth)acryloyloxymethylenesuccinimides, N-(meth) acryloyl-6-oxyhexamethylenesuccinimides, and N-(meth)acryloyl-8-oxyoctamethylenesuccinimides; vinyl monomers such as vinyl acetate, N-vinylpyrrolidone, N-vinylcarboxamides, styrene, and N-vinylcaprolactam; cyano-acrylate monomers such as acrylonitrile and methacrylonitrile; acrylic ester monomers such as glycidyl (meth)acrylates, tetrahydrofurfuryl (meth)acrylates, polyethylene glycol (meth)acrylates, polypropylene glycol (meth)acrylates, fluorine-containing (meth)acrylates, silicon-containing (meth)acrylates, and 2-methoxyethyl acrylate; alkyl (meth)acrylates having an alkyl group other than those of the alkyl (meth)acrylates constituting the main component of the composition, such as methyl (meth)acrylates and nonadecyl (meth)acrylates; and alicyclic (meth)acrylates such as isobornyl (meth)acrylates. Each of these copolymerizable monomers may be used alone or in combination.

When the vinyl monomer mixture or a partially polymerized prepolymer thereof constituting the blowing agent-containing pressure-sensitive adhesive composition further contains one or more copolymerizable monomers, the vinyl monomer mixture preferably contains 60 to 99.9 percent by weight of vinyl monomers and 0.1 to 40 percent by weight of copolymerizable monomers; more preferably contains 70 to 99.5 percent by weight of vinyl monomers and 0.5 to 30 percent by weight of copolymerizable monomers; and further preferably contains 80 to 99 percent by weight of vinyl monomers and 1 to 20 percent by weight of copolymerizable monomers.

Of such copolymerizable monomers, hydroxyl-containing monomers and carboxyl-containing monomers are preferred, of which acrylic acid is more preferred. The amount thereof is preferably 1 to 10 percent by weight] based on the total monomer components, for higher adhesive strength.

The blowing agent-containing pressure-sensitive adhesive composition may contain one or more polymerization initiators of every kind, such as thermopolymerization initiators and photoinitiators. Among them, photoinitiators are preferably used for shorter polymerization time periods.

In a preferred embodiment, a blowing agent-containing pressure-sensitive adhesive composition containing a polymerization initiator, such as a thermopolymerization initiator or photoinitiator, is used for the formation of the blowing agent-containing pressure-sensitive adhesive layer. This pressure-sensitive adhesive composition as containing a blowing agent can be cured as intact through a curing reaction by the action of heat or active energy rays, to give a pressure-sensitive adhesive layer containing a blowing agent. Specifically, this easily gives a pressure-sensitive adhesive layer structurally stably containing a blowing agent. In a preferred embodiment, a photoinitiator is used as the polymerization initiator. In this embodiment, it is desirable to employ a polymerization reaction by the action of active energy rays (photo-curing reaction) to give a pressure-sensitive adhesive layer structurally stably containing a blowing agent. Each of different polymerization initiators may be used alone or in combination.

Exemplary photoinitiators for use in the blowing agent-containing pressure-sensitive adhesive composition for the formation of the blowing agent-containing pressure-sensitive adhesive composition layer include, but are not limited to, benzoin ether photoinitiators, acetophenone photoinitiators, $\alpha$-ketol photoinitiators, aromatic sulfonyl chloride photoinitiators, photoactive oxime photoinitiators, benzoin photoinitiators, benzil photoinitiators, benzophenone photoinitiators, ketal photoinitiators, and thioxanthone photoinitiators.

Specifically, exemplary benzoin ether photoinitiators include benzoin methyl ether, benzoin ethyl ether, benzoin propyl ether, benzoin isopropyl ether, benzoin isobutyl ether, 2,2-dimethoxy-1,2-diphenylethan-1-one, and anisole methyl ether. Exemplary acetophenone photoinitiators include 2,2-diethoxyacetophenone, 2,2-dimethoxy-2-phenylacetophenone, 1-hydroxycyclohexylphenyl ketone, 4-phenoxydichloroacetophenone, and 4-t-butyl-dichloroacetophenone. Exemplary $\alpha$-ketol photoinitiators include 2-methyl-2-hydroxypropiophenone and 1-[4-(2-hydroxyethyl)-phenyl]-2-hydroxy-2-methylpropan-1-one. Exemplary aromatic sulfonyl chloride photoinitiators include 2-naphthalenesulfonyl chloride. Exemplary photoactive oxime photoinitiators include 1-phenyl-1,1-propanedione-2-(o-ethoxycarbonyl)-oxime. Exemplary benzoin photoinitiators include benzoin. Exemplary benzil photoinitiators include benzil (dibenzoyl). Exemplary benzophenone photoinitiators include benzophenone, benzoylbenzoic acid, 3,3'-dimethyl-4-methoxybenzophenone, polyvinylbenzophenone, and $\alpha$-hydroxycyclohexyl phenyl ketone. Exemplary ketal photoinitiators include benzil dimethyl ketal. Exemplary thioxanthone photoinitiators include thioxanthone, 2-chlorothioxanthone, 2-methylthioxanthone, 2,4-dimethylthioxanthone, isopropylthioxanthone, 2,4-dichlorothioxanthone, 2,4-diethylthioxanthone, 2,4-diisopropylthioxanthone, and dodecylthioxanthone.

Exemplary thermopolymerization initiators for use in the blowing agent-containing pressure-sensitive adhesive composition include azo thermopolymerization initiators such as 2,2'-azobisisobutyronitrile, 2,2'-azobis-2-methylbutyronitrile, dimethyl 2,2'-azobis(2-methylpropionate), 4,4'-azobis-4-cyanovaleric acid, azobisisovaleronitrile, 2,2'-azobis(2-amidinopropane) dihydrochloride, 2,2'-azobis[2-(5-methyl-2-imidazolin-2-yl)propane] dihydrochloride, 2,2'-azobis(2-methylpropionamidine) disulfate, and 2,2'-azobis(N,N'-dimethyleneisobutylamidine) dihydrochloride; peroxide thermopolymerization initiators such as dibenzoyl peroxide and tert-butyl permaleate; and redox thermopolymerization initiators. The amount of thermopolymerization initiators is not particularly limited, as long as the initiators can act as thermopolymerization initiators.

The amount of photoinitiators in the blowing agent-containing pressure-sensitive adhesive composition is, for example, 0.001 to 5 parts by weight, preferably 0.01 to 5 parts by weight, and more preferably 0.05 to 3 parts by weight, to 100 parts by weight of total monomer components of the vinyl monomer mixture or a partially polymerized prepolymer thereof in the blowing agent-containing pressure-sensitive adhesive composition.

To activate photoinitiators, an active energy ray is applied to the blowing agent-containing pressure-sensitive adhesive composition. Exemplary active energy rays include ionizing radiations such as alpha rays, beta rays, gamma rays, neutron beams, and electron beams; and ultraviolet rays, of which ultraviolet rays are preferred. Conditions for the application of active energy rays, such as irradiation energy and irradiation period, are not particularly limited and have only to be such as to activate the photoinitiator and cause a reaction of monomer components.

The blowing agent for use in the pressure-sensitive adhesive composition is not particularly limited and can be suitable selected from among known blowing agents. Among them, preferred are expanding agents encapsulated in microcapsules. Exemplary expanding agents encapsulated in microcapsules include microspheres each including an elastic shell and, encapsulated therein, a material that easily gasifies and expands by heating, such as isobutane, propane, or pentane (hereinafter also referred to as "heat-expandable microspheres")

The shell of the heat-expandable microspheres is generally frequently comprised of a thermoplastic material, a hot-melt material, or a material that breaks as a result of expansion by heating. Exemplary materials constituting the shell of the heat-expandable microspheres include vinylidene chloride-acrylonitrile copolymers, poly(vinyl alcohol)s, poly (vinyl butyral)s, poly(methyl methacrylate)s, polyacrylonitriles, poly(vinylidene chloride)s, and polysulfones. These heat-expandable microspheres can be prepared according to a common procedure such as coacervation or interfacial polymerization.

The heat-expandable microspheres are also available as commercial products. Exemplary commercially available heat-expandable microspheres as the blowing agent include, but are not limited to, products supplied by Matsumoto Yushi-Seiyaku Co., Ltd. under the trade names of "Matsumoto Microsphere F-30", "Matsumoto Microsphere F-50", "Matsumoto Microsphere F-80S", and "Matsumoto Microsphere F-85"; and products supplied by Akzo Nobel Surface Chemistry AB under the trade name of "EXPANCEL Du".

The average particle diameter of heat-expandable microspheres is generally about 1 to 80 $\mu$m, and preferably about 3 to 50 $\mu$m to be finely dispersed and to form a thin layer.

Heat-expandable microspheres, if used as the blowing agent, preferably have such a suitable strength that they do not rupture until the coefficient of cubic expansion reaches 5 times or more, and more preferably 10 times or more, in order to efficiently reduce the adhesion of the pressure-sensitive adhesive layer containing the blowing agent by heating. If a heat-expandable microsphere that ruptures at a low expansion rate or a blowing agent not encapsulated in a microcapsule is used as the blowing agent, it may not help to sufficiently reduce the adhesive area between the blowing agent-containing pressure-sensitive adhesive layer and the adherend, resulting in poor peeling; and the resulting adhesive tape may not be satisfactorily separated or debonded by heating, for example, at the interface between the blowing agent-containing pressure-sensitive adhesive layer and the peelable or peel-assisting film layer.

While varying depending on its type, the amount of the blowing agent is, for example, about 10 to 200 parts by weight, preferably about 20 to 125 parts by weight, and more preferably about 25 to 100 parts by weight, to 100 parts by weight of total monomer components in the vinyl monomer mixture or a partially polymerized prepolymer thereof constituting the blowing agent-containing pressure-sensitive adhesive composition. A blowing agent in an amount of less than 10 parts by weight may not sufficiently allow the pressure-sensitive adhesive layer to expand and deform after heating treatment; and the resulting adhesive tape may not be satisfactorily separated or debonded by heating, for example, at the interface between the blowing agent-containing pressure-sensitive adhesive layer and the peelable or peel-assisting film layer. In contrast, a blowing agent in an amount of more than 200 parts by weight will often cause a cohesive failure of the pressure-sensitive adhesive layer.

Exemplary other blowing agents for use in the blowing agent-containing pressure-sensitive adhesive composition include a variety of inorganic blowing agents and organic blowing agents. Exemplary representative inorganic blowing agents include ammonium carbonate, ammonium hydrogen carbonate, sodium hydrogen carbonate, ammonium nitrite, sodium borohydride, and azides. Exemplary representative organic blowing agents include water; chlorofluoroalkanes such as trichloromonofluoromethane and dichloromonofluoromethane; azo compounds such as azobisisobutyronitrile, azodicarbonamide, and barium azodicarboxylate; hydrazine compounds such as p-toluenesulfonyl hydrazide, diphenylsulfone-3,3'-disulfonyl hydrazide, 4,4'-oxybis(benzenesulfonyl hydrazide), and allylbis(sulfonyl hydrazide); semicarbazide compounds such as p-toluylenesulfonyl semicarbazide and 4,4'-oxybis(benzenesulfonyl semicarbazide); triazole compounds such as 5-morpholyl-1,2,3,4-thiatriazole; and N-nitroso compounds such as N,N'-dinitrosopentamethylenetetramine and N,N'-dimethyl-N,N'-dinitrosoterephthalamide. Each of different blowing agents may be used alone or in combination. Where necessary, the blowing agent-containing pressure-sensitive adhesive composition may further contain a foaming (blowing) aid.

The polyfunctional (meth)acrylate for use in the blowing agent-containing pressure-sensitive adhesive composition can be any compounds each having at least two (meth)acryloyl groups.

Exemplary polyfunctional (meth)acrylates include trimethylolpropane tri(meth)acrylates, tetramethylolmethane tetraacrylate, pentaerythritol di(meth)acrylates, pentaerythritol tri(meth)acrylates, pentaerythritol tetra(meth)acrylates, 1,2-ethylene glycol di(meth)acrylates, 1,4-butylene glycol di(meth)acrylates, 1,6-hexanediol di(meth)acrylates, 1,12-dodecanediol di(meth)acrylates, dipentaerythritol monohydroxypenta(meth)acrylates, dipentaerythritol hexa(meth)acrylates, polyethylene glycol di(meth)acrylates, hexanediol di(meth)acrylates, (poly)ethylene glycol di(meth)acrylates, (poly)propylene glycol di(meth)acrylates, neopentyl glycol di(meth)acrylates, tetramethylolmethane tri(meth)acrylates, allyl (meth)acrylates, vinyl (meth)acrylates, epoxy acrylates, polyester acrylates, urethane acrylates, and reactive hyperbranched polymers having two or more terminal (meth)acryloyl groups [e.g., products supplied by Sartomer Company, Inc. under the trade names of "CN2300", "CN2301", and "CN2320". Each of different polyfunctional (meth)acrylates may be used alone or in combination.

The amount of polyfunctional (meth)acrylates is preferably controlled so that the solvent-insoluble content of a blowing agent-containing pressure-sensitive adhesive layer formed from the blowing agent-containing pressure-sensitive adhesive composition is 50 to 99 percent by weight, and preferably 70 to 95 percent by weight. If the solvent-insoluble content is less than 50 percent by weight, the tape may not sufficiently undergo peeling as a result of expansion or foaming. In contrast, if it exceeds 99 percent by weight, the tape may exhibit insufficient wettability and may not satisfactorily adhere to an adherend.

As used herein the "solvent-insoluble content" of a blowing agent-containing pressure-sensitive adhesive layer refers to a "proportion of solvent-insoluble components" in the blowing agent-containing pressure-sensitive adhesive layer and is determined according to the following "technique of measuring the solvent-insoluble content of a blowing agent-containing pressure-sensitive adhesive layer". Such solvent-insoluble components in the blowing agent-containing pressure-sensitive adhesive layer also include blowing agents that are insoluble in solvents.

The solvent-insoluble content of a blowing agent-containing pressure-sensitive adhesive layer may be determined in the following manner. About 1 g of the blowing agent-containing pressure-sensitive adhesive layer is sampled and precisely weighed to give a weight of the blowing agent-containing pressure-sensitive adhesive layer before immersion. Next, this sample is immersed in about 40 g of ethyl acetate for 7 days, and all components insoluble in ethyl acetate are recovered, dried at 130°C for 2 hours, and the dry weight of the insoluble components is determined. The determined dry weight is substituted into the following equation to calculate the solvent-insoluble content.

Solvent-insoluble content (%) of blowing agent-containing pressure-sensitive adhesive layer = [(Dry weight of insoluble components)/(Weight of blowing agent-containing pressure-sensitive adhesive layer before immersion)] x 100

The amount of polyfunctional (meth)acrylates is preferably set so that the solvent-insoluble content of the blowing agent-containing pressure-sensitive adhesive layer falls within the above-specified range, as mentioned above. While varying depending typically on its molecular weight and number of functional groups, the specific amount thereof is generally 0.001 to 5 parts by weight, preferably 0.001 to 3 parts by weight, and more preferably 0.01 to 2 parts by weight, to 100 parts by weight of total monomer components of the vinyl monomer mixture or a partially polymerized prepolymer thereof in the blowing agent-containing pressure-sensitive adhesive composition. Polyfunctional (meth)acrylates in an amount exceeding 5 parts by weight may cause, for example, an excessively high cohesive force and reduced adhesion of the blowing agent-containing pressure-sensitive adhesive layer. In contrast, a polyfunctional (meth)acrylate in an excessively small amount of, e.g., less than 0.001 parts by weight, may cause an insufficient cohesive force of the blowing agent-containing pressure-sensitive adhesive composition layer.

The blowing agent-containing pressure-sensitive adhesive composition may further contain a variety of additives. Exemplary additives include crosslinking agents such as isocyanate crosslinking agents and epoxy crosslinking agents; tackifiers such as rosin derivative resins, polyterpene resins, petroleum resins, and oil-soluble phenol resins; plasticizers; fillers; age inhibitors; and surfactants.

The way to form a blowing agent-containing pressure-sensitive adhesive layer is not particularly limited. Typically, the blowing agent-containing pressure-sensitive adhesive layer may be formed by applying the blowing agent-containing pressure-sensitive adhesive composition to a suitable support, such as a separator or base, to form a blowing agent-containing pressure-sensitive adhesive composition layer thereon; and drying and/or curing (e.g., curing by the application of heat or active energy rays) the layer according to necessity. When curing by the application of active energy rays (photocuring) is conducted, it is desirable to block oxygen typically by affixing a suitable support such as a separator or base onto the layer or carrying out photocuring in an atmosphere of nitrogen gas, because oxygen in the air may adversely affect the photopolymerization reaction. The support used in the preparation of the blowing agent-containing pressure-sensitive adhesive layer may be removed during an adequate step in the preparation of a heat-expandable/peelable acrylic pressure-sensitive adhesive tape or may be removed upon use of the prepared heat-expandable/peelable acrylic pressure-sensitive adhesive tape.

The thickness of the blowing agent-containing pressure-sensitive adhesive layer may be suitably set according typically to the usage of the adhesive tape and how much the adhesion thereof is reduced by heating. For keeping a smooth surface of the adhesive tape, the thickness is preferably equal to or larger than the maximum particle diameter of the blowing agent, typified by heat-expandable microspheres, and is, for example, about 1 to 300 $\mu$m, preferably about 10 to 250 $\mu$m, and more preferably about 30 to 200 $\mu$m. A blowing agent-containing pressure-sensitive adhesive layer having an excessively small thickness may not contribute to sufficient adhesion to hold the adherend. The blowing agent-containing pressure-sensitive adhesive layer may have a single-layer structure or a multilayer structure.

Peelable or Peel-Assisting Film Layer

A peelable or peel-assisting film constituting the peelable or peel-assisting film layer is a film that constitutes part of heat-expandable/peelable acrylic pressure-sensitive adhesive tapes according to embodiments of the present invention. This film has a sufficient adhesive strength at room temperature to the blowing agent-containing pressure-sensitive adhesive layer and helps to provide easy peeling, as a result of a heating treatment, at the interface between the adherend and the blowing agent-containing pressure-sensitive adhesive layer or at the interface between the blowing agent-containing pressure-sensitive adhesive layer and the peelable or peel-assisting film layer, as the blowing agent in the pressure-sensitive adhesive layer expands or foams by the heating treatment. By the action of the peelable or peel-assisting film having these characteristic properties, when the heat-expandable/peelable acrylic pressure-sensitive adhesive tape is affixed to an adherend and then a heating treatment is carried out, the pressure-sensitive adhesive layer (pressure-sensitive adhesive component) can remain on the adherend.

The peelable or peel-assisting film can be any one, as long as having the characteristic properties, and exemplary peelable or peel-assisting films include plastic base films (synthetic resin films) including polyester films such as poly (ethylene terephthalate) films; olefinic resin films such as polyethylene films and polypropylene films; poly(vinyl chloride) films; polyimide films; polyamide films such as nylon films; and rayon films.

Among them, polyester films such as poly(ethylene terephthalate) films are preferred, because they excel in balance between the adhesive strength under ambient conditions and the peel force upon expansion or foaming by heating and are easily processable. When two or more peelable or peel-assisting films are used, they may be composed of identical or different materials.

The thickness of plastic base films, if used as the peelable or peel-assisting film, is not particularly limited and is generally 3 to 50 $\mu$m, and preferably 5 to 40 $\mu$m. When two or more peelable or peel-assisting films are used, they may have identical or different thicknesses. Plastic base films, if used as the peelable or peel-assisting film, may each have a single-layer structure or a multilayer structure.

Exothermic films that generate heat upon application of current may also be used as the peelable or peel-assisting film. Specifically, in an embodiment, the peelable or peel-assisting film layer is an exothermic film layer composed of an exothermic film. In this embodiment, the exothermic film layer alone can be locally heated typically through heat generation by directly applying current to the exothermic film or through heat generation by high-frequency induction heating. Accordingly, the heat-expandable/peelable acrylic pressure-sensitive adhesive tape affixed to an adherend can be easily separated or debonded, without heating the entire adherend including the bonded part, as a result of peeling typically at the interface between the adherend and the blowing agent-containing pressure-sensitive adhesive layer or at the interface between the blowing agent-containing pressure-sensitive adhesive layer and the peelable or peel-assisting film layers.

. As is described above, such heat-expandable/peelable acrylic pressure-sensitive adhesive tapes according to this embodiment use an exothermic film that generates heat upon application of current as the peelable or peel-assisting film. The heat-expandable/peelable acrylic pressure-sensitive adhesive tapes, if affixed to an adherend, can be separated or debonded without heating the adherend itself.

The heat-expandable/peelable acrylic pressure-sensitive adhesive tapes using an exothermic film that generates heat upon application of current as the peelable or peel-assisting film may be advantageously used with respect to adherends that are liable to deteriorate by the action of heat, and adherends such as parts that suffer from deficiencies by the application of heat.

In addition, these heat-expandable/peelable acrylic pressure-sensitive adhesive tapes can be separated or debonded without heating the entire adherend, and this allows use of compact apparatuses such as electrification apparatuses and dielectric heating apparatuses (induction heating apparatuses), in addition to large-sized heating apparatuses for heating the entire adherent.

The exothermic film can be any one that is capable of generating heat upon application of current, and exemplary exothermic films include metal foils (films of various metals); articles comprised of a resin film and, arranged in a zigzag direction therein, a heating wire [e.g., a metal wire having a large electric resistance, such as a nichrome wire (metal wire of nickel-chromium alloy) and a metal wire of iron-chromium alloy); articles comprised of a resin film and, arranged therein, a metal foil; and resins containing electroconductive particles such as electroconductive carbon particles as kneaded therein.

Exemplary metal foils (films of various metals) include electroconductive metal foils such as aluminum foil and copper foil.

The sheet resistance of the exothermic film is preferably 2 to 150 ohms per square ($\Omega$/□), and more preferably 5 to 140 ohms per square, for generating heat in a sufficient amount to carry out the heating treatment of the blowing agent-containing pressure-sensitive adhesive layer. An exothermic film having a sheet resistance of less than 2 ohms per square may require the application of a high voltage to generate heat in a sufficient amount, and this may restrict the design of a power supply. In contrast, an exothermic film having a sheet resistance of more than 150 ohms per square may require the application of a high voltage to generate heat in a sufficient amount, and this may require a special power supply suitable for such a high voltage. As used herein a "sheet resistance" refers to a value as measured with a surface resistance meter according to a four-probe measurement technique.

The thickness of the exothermic film, if used as a film constituting the peelable or peel-assisting film layer, is not particularly limited, but it is generally 10 to 200 μm, and preferably 20 to 50 μm, when a metal foil film, for example, is used as the exothermic film.

An exothermic film layer of exothermic film, if used as the peelable or peel-assisting film layer, may have a single-layer structure or a multilayer structure.

[Process for the Production of Heat-Expandable/Peelable Acrylic Pressure-Sensitive Adhesive Tape]

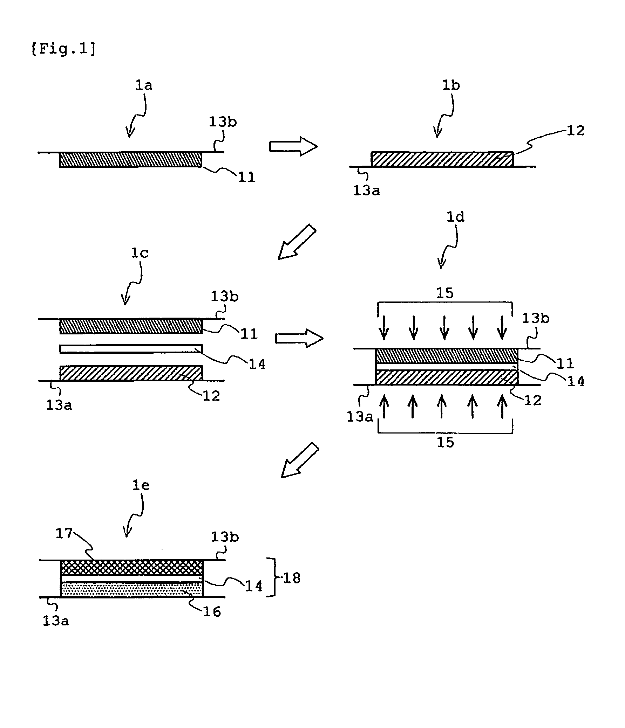

Processes for the production of heat-expandable/peelable acrylic pressure-sensitive adhesive tapes according to embodiments of the present invention will be illustrated in detail with reference to the attached drawings. The heat-expandable/peelable acrylic pressure-sensitive adhesive tapes each include at lest a peelable or peel-assisting film, a viscoelastic substrate containing microparticles, and a pressure-sensitive adhesive layer containing a blowing agent. FIG. 1, FIG. 2, and FIG. 3 illustrate examples of processes for producing heat-expandable/peelable acrylic pressure-sensitive adhesive tapes (Production Embodiments 1 to 3, respectively), but the way to produce heat-expandable/peelable acrylic pressure-sensitive adhesive tapes is not limited to these Production Embodiments.

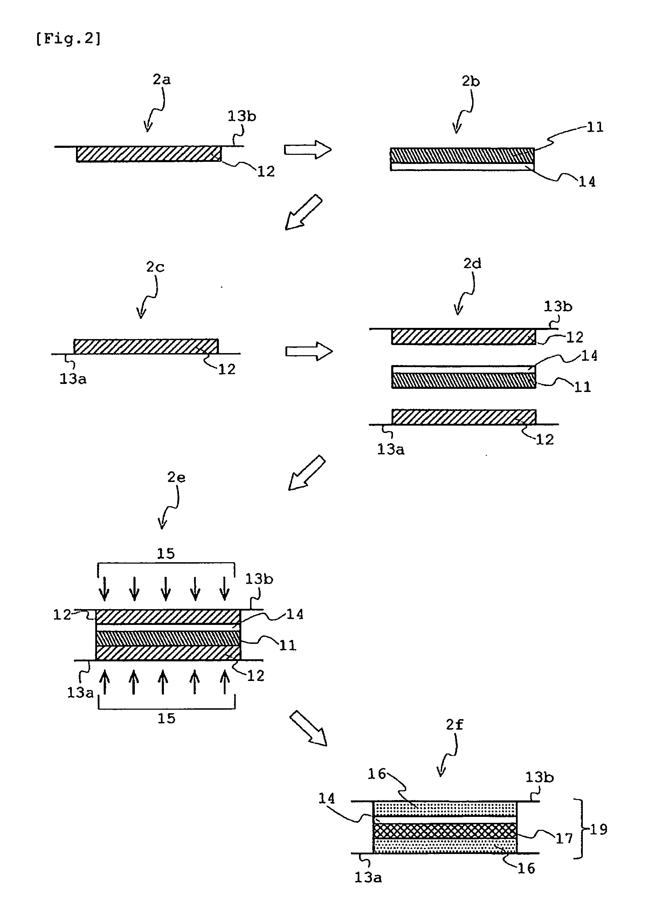

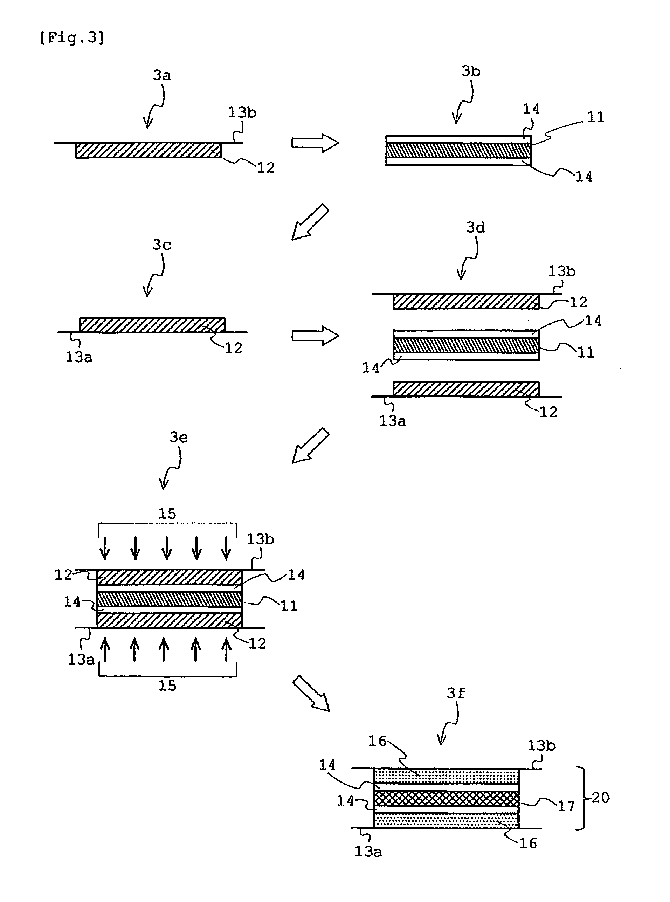

FIG. 1 is schematic cross-sectional views illustrating an example of the way to produce heat-expandable/peelable acrylic pressure-sensitive adhesive tapes according to embodiments of the present invention; and FIG. 2 and FIG. 3 are schematic cross-sectional views illustrating other examples of the way to produce the heat-expandable/peelable acrylic pressure-sensitive adhesive tapes. In these figures, the reference numeral 11 stands for a blowing agent-containing pressure-sensitive adhesive layer, 12 stands for a microparticle-containing polymerizable composition layer, 13a stands for a process separator, 13b stands for a process separator, 14 stands for a peelable or peel-assisting film, 15 stands for active energy rays, 16 stands for a microparticle-containing viscoelastic substrate, 17 stands for a blowing agent-containing pressure-sensitive adhesive layer, and 18, 19, and 20 each stand for a heat-expandable/peelable acrylic pressure-sensitive adhesive tape.

Production Embodiment 1 of Heat-Expandable/Peelable Acrylic Pressure-Sensitive Adhesive Tapes

A first step of Production Embodiment 1 is the step of applying a blowing agent-containing pressure-sensitive adhesive composition to a surface, which has been subjected to a release treatment (hereinafter this type of surface is also referred to as "release-treated surface"), of a process separator 13b to form a blowing agent-containing pressure-sensitive adhesive composition layer 11 thereon. This step yields a sheet which includes the process separator 13b and, arranged on its release-treated surface, the blowing agent-containing pressure-sensitive adhesive composition layer 11. 1a in FIG. 1 illustrates the first step of Production Embodiment 1.

A second step of Production Embodiment 1 is the step of applying a microparticle-containing polymerizable composition to a release-treated surface of another process separator 13a to form a microparticle-containing polymerizable composition layer 12 thereon. This step yields a sheet comprised of the process separator 13a and, arranged on its release-treated surface, the microparticle-containing polymerizable composition layer 12. 1b in FIG. 1 illustrates the second step of Production Embodiment 1.

A third step of Production Embodiment 1 is the step of applying the sheet prepared in the first step to one side of a peelable or peel-assisting film 14 so that the peelable or peel-assisting film 14 is in contact with the blowing agent-containing pressure-sensitive adhesive composition layer 11, and applying the sheet prepared in the second step to the other side of the peelable or peel-assisting film 14 so that the peelable or peel-assisting film 14 is in contact with the microparticle-containing polymerizable composition layer 12. This step yields an assembly (laminate) which includes the peelable or peel-assisting film 14; the blowing agent-containing pressure-sensitive adhesive composition layer 11 and the process separator 13b arranged in this order on one side of the peelable or peel-assisting film 14; and the microparticle-containing polymerizable composition layer 12 and the process separator 13a arranged in this order on the other side of the peelable or peel-assisting film 14. 1c in FIG. 1 illustrates the third step of Production Embodiment 1.

A fourth step of Production Embodiment 1 is the step of applying active energy rays 15 to both sides of the assembly prepared in the third step through the process separator 13a and the process separator 13b. This step photocures the microparticle-containing polymerizable composition layer 12 and the blowing agent-containing pressure-sensitive adhesive composition layer 11 to convert them into a microparticle-containing viscoelastic substrate 16 and a blowing agent-containing pressure-sensitive adhesive layer 17, respectively. In the assembly, the process separator 13a and the process separator 13b act to isolate oxygen from the microparticle-containing polymerizable composition layer 12 and the blowing agent-containing pressure-sensitive adhesive composition layer 11. 1d in FIG. 1 illustrates the fourth step of Production Embodiment 1.

1e in FIG. 1 illustrates a heat-expandable/peelable acrylic pressure-sensitive adhesive tape 18 produced according to Production Embodiment 1. The heat-expandable/peelable acrylic pressure-sensitive adhesive tape 18 includes the peelable or peel-assisting film 14; arranged on one side thereof, the microparticle-containing viscoelastic substrate 16; and arranged on the other side, the blowing agent-containing pressure-sensitive adhesive layer 17. Namely, it structurally include a multilayer structure of the peelable or peel-assisting film layer 14 and the microparticle-containing viscoelastic substrate 16 arranged so that the peelable or peel-assisting film layer 14 is in contact with one side of the blowing agent-containing pressure-sensitive adhesive layer 17. In the heat-expandable/peelable acrylic pressure-sensitive adhesive tape 18, the microparticle-containing viscoelastic substrate 16 and the blowing agent-containing pressure-sensitive adhesive layer 17 are protected by the process separator 13a and the process separator 13b, respectively.

Production Embodiment 2 of Heat-Expandable/Peelable Acrylic Pressure-Sensitive Adhesive Tapes

A first step of Production Embodiment 2 is the step of applying a microparticle-containing polymerizable composition to a release-treated surface of a process separator 13b to form a microparticle-containing polymerizable composition layer 12 thereon. This step yields a sheet which includes the process separator 13b, and arranged on its release-treated surface, the microparticle-containing polymerizable composition layer 12. 2a in FIG. 2 illustrates the first step of Production Embodiment 2.

A second step of Production Embodiment 2 is the step of applying a blowing agent-containing pressure-sensitive adhesive composition to one side of a peelable or peel-assisting film 14 to form a blowing agent-containing pressure-sensitive adhesive composition layer 11 thereon. This step yields a sheet which includes the peelable or peel-assisting film 14, and arranged on one side thereof, the blowing agent-containing pressure-sensitive adhesive composition layer 11. 2b in FIG. 2 illustrates the second step of Production Embodiment 2.

A third step of Production Embodiment 2 is the step of applying a microparticle-containing polymerizable composition to a release-treated surface of a process separator 13a to form a microparticle-containing polymerizable composition layer 12 thereon. This step yields a sheet comprised of the process separator 13a and, arranged on its release-treated surface, the microparticle-containing polymerizable composition layer 12. 2c in FIG. 2 illustrates the third step of Production Embodiment 2.

A fourth step of Production Embodiment 2 is the step of applying the sheet prepared in the first step to the sheet prepared in the second step so that the peelable or peel-assisting film 14 is in contact with the microparticle-containing polymerizable composition layer 12; and further applying the sheet prepared in the third step to the sheet prepared in the second step so that the blowing agent-containing pressure-sensitive adhesive composition layer 11 is in contact with the microparticle-containing polymerizable composition layer 12. This step yields an assembly which includes the blowing agent-containing pressure-sensitive adhesive composition layer 11; arranged in the following order on one side thereof, the peelable or peel-assisting film 14 and the microparticle-containing polymerizable composition layer 12 to constitute a multilayer structure, and the process separator 13b, in which the blowing agent-containing pressure-sensitive adhesive composition layer 11 is in contact with the peelable or peel-assisting film 14; arranged in the following order on the other side of the blowing agent-containing pressure-sensitive adhesive composition layer 11, the microparticle-containing polymerizable composition layer 12 and the process separator 13a. 2d in FIG. 2 illustrates the fourth step of Production Embodiment 2.

A fifth step of Production Embodiment 2 is the step of applying active energy rays 15 to both sides of the assembly prepared in the fourth step through the process separator 13a and the process separator 13b. This step photocures the microparticle-containing polymerizable composition layer 12 and the blowing agent-containing pressure-sensitive adhesive composition layer 11 to convert them into a microparticle-containing viscoelastic substrate 16 and a blowing agent-containing pressure-sensitive adhesive layer 17, respectively. 2e in FIG. 2 illustrates the fifth step of Production Embodiment 2.

2f in FIG. 2 illustrates a heat-expandable/peelable acrylic pressure-sensitive adhesive tape 19 produced according to Production Embodiment 2. The heat-expandable/peelable acrylic pressure-sensitive adhesive tape 19 includes the blowing agent-containing pressure-sensitive adhesive layer 17; arranged on one side thereof, a multilayer structure composed of the peelable or peel-assisting film 14 and the microparticle-containing viscoelastic substrate 16; and arranged on the other side, the microparticle-containing viscoelastic substrate 16. Therefore, the adhesive tape 19 has one interface between the peelable or peel-assisting film 14 and the blowing agent-containing pressure-sensitive adhesive layer 17.

Production Embodiment 3 of Heat-Expandable/Peelable Acrylic Pressure-Sensitive Adhesive Tapes

A first step of Production Embodiment 3 is the step of applying a microparticle-containing polymerizable composition to a release-treated surface of a process separator 13b to form a microparticle-containing polymerizable composition layer 12 thereon. This step yields a sheet which includes the process separator 13b, and arranged on its release-treated surface, the microparticle-containing polymerizable composition layer 12. 3a in FIG. 3 illustrates the first step of Production Embodiment 3.

A second step of Production Embodiment 3 is the step of applying a blowing agent-containing pressure-sensitive adhesive composition to one side of a peelable or peel-assisting film 14 to form a blowing agent-containing pressure-sensitive adhesive composition layer 11 thereon, and affixing another peelable or peel-assisting film 14 to the blowing agent-containing pressure-sensitive adhesive composition layer 11 to give a sheet assembly which includes the blowing agent-containing pressure-sensitive adhesive composition layer 11, and arranged on both sides thereof, the peelable or peel-assisting films 14. 3b in FIG. 3 illustrates the second step of Production Embodiment 3.

A third step of Production Embodiment 3 is the step of applying a microparticle-containing polymerizable composition to a release-treated surface of another process separator 13a to form a microparticle-containing polymerizable composition layer 12 thereon. This step yields a sheet comprised of the process separator 13a and, arranged on its release-treated surface, the microparticle-containing polymerizable composition layer 12. 3c in FIG. 3 illustrates the third step of Production Embodiment 3.

A fourth step of Production Embodiment 3 is the step of applying the sheet prepared in the first step to one of the peelable or peel-assisting films 14 of the sheet assembly prepared in the second step so that the one peelable or peel-assisting film 14 is in contact with the microparticle-containing polymerizable composition layer 12, and applying the sheet prepared in third step to the other peelable or peel-assisting film 14 so that the other peelable or peel-assisting film 14 is in contact with the microparticle-containing polymerizable composition layer 12. This step yields an assembly which includes the blowing agent-containing pressure-sensitive adhesive composition layer 11; arranged on one side thereof, a multilayer structure composed of the peelable or peel-assisting film 14 and microparticle-containing polymerizable composition layer 12 so that the blowing agent-containing pressure-sensitive adhesive composition layer 11 is in contact with the peelable or peel-assisting film 14; arranged on the multilayer structure, the process separator 13b; arranged on the other side of the blowing agent-containing pressure-sensitive adhesive composition layer 11, another multilayer structure composed of the peelable or peel-assisting film 14 and the microparticle-containing polymerizable composition layer 12 so that the blowing agent-containing pressure-sensitive adhesive composition layer 11 is in contact with the peelable or peel-assisting film 14; and arranged on this multilayer structure, the process separator 13a. 3d in FIG. 3 illustrates the fourth step of Production Embodiment 3.

A fifth step of Production Embodiment 3 is the step of applying active energy rays 15 to both sides of the assembly prepared in the fourth step through the process separator 13a and the process separator 13b. This step photocures the microparticle-containing polymerizable composition layer 12 and the blowing agent-containing pressure-sensitive adhesive composition layer 11 to convert them into a microparticle-containing viscoelastic substrate 16 and a blowing agent-containing pressure-sensitive adhesive layer 17, respectively. 3e in FIG. 3 illustrates the fifth step of Production Embodiment 3.

3f in FIG. 3 illustrates a heat-expandable/peelable acrylic pressure-sensitive adhesive tape 20 produced according to Production Embodiment 3. The heat-expandable/peelable acrylic pressure-sensitive adhesive tape 20 has two interfaces between a peelable or peel-assisting film 14 and a blowing agent-containing pressure-sensitive adhesive layer 17, since it includes one multilayer structure of the peelable or peel-assisting film 14 and the microparticle-containing viscoelastic substrate 16 on one side of the blowing agent-containing pressure-sensitive adhesive layer 17; and another multilayer structure of the peelable or peel-assisting film 14 and the microparticle-containing viscoelastic substrate 16 on the other side.

Production Embodiment 4 of Heat-Expandable/Peelable Acrylic Pressure-Sensitive Adhesive Tape

A heat-expandable/peelable acrylic pressure-sensitive adhesive tape having a multilayer structure composed of (process separator)/(bubble-bearing microparticle-containing viscoelastic substrate)/(blowing agent-containing pressure-sensitive adhesive layer)/(peelable or peel-assisting film)/(blowing agent-containing pressure-sensitive adhesive layer)/(bubble-bearing microparticle-containing viscoelastic substrate)/(process separator) may be prepared, for example, in the following manner.

A bubble-bearing microparticle-containing polymerizable composition is applied to a release-treated surface of a process separator to yield a bubble-bearing microparticle-containing polymerizable composition layer sheet which includes a process separator and, arranged thereon, a bubble-bearing microparticle-containing polymerizable composition layer. Additionally, a blowing agent-containing pressure-sensitive adhesive composition is applied to a release-treated surface of another process separator to yield a blowing agent-containing pressure-sensitive adhesive composition layer sheet which includes a process separator and, arranged thereon, a blowing agent-containing pressure-sensitive adhesive composition layer. Next, the blowing agent-containing pressure-sensitive adhesive composition layer sheet is affixed to the bubble-bearing microparticle-containing polymerizable composition layer sheet so that the bubble-bearing microparticle-containing polymerizable composition layer is in contact with the blowing agent-containing pressure-sensitive adhesive composition layer to yield a sheet assembly. Active energy rays, such as ultraviolet rays, are applied to both sides of the sheet assembly to photocure the bubble-bearing microparticle-containing polymerizable composition and the blowing agent-containing pressure-sensitive adhesive composition to yield a sheet having a multilayer structure comprised of a bubble-bearing microparticle-containing viscoelastic substrate and a blowing agent-containing pressure-sensitive adhesive layer. Repeating this procedure gives another sheet having a multilayer structure comprised of a bubble-bearing microparticle-containing viscoelastic substrate and a blowing agent-containing pressure-sensitive adhesive layer.

Next, each one process separator of the prepared two sheets is removed to expose the blowing agent-containing pressure-sensitive adhesive layers, and the two sheets are sequentially affixed to one side and the other side of a peelable or peel-assisting film, respectively, to yield a heat-expandable/peelable acrylic pressure-sensitive adhesive tape having a multilayer structure composed of (process separator)/(bubble-bearing microparticle-containing viscoelastic substrate)/(blowing agent-containing pressure-sensitive adhesive layer)/(peelable or peel-assisting film)/(blowing agent-containing pressure-sensitive adhesive layer)/(bubble-bearing microparticle-containing viscoelastic substrate)/(process separator).

Production Embodiment 5 of Heat-Expandable/Peelable Acrylic Pressure-Sensitive Adhesive Tape

A heat-expandable/peelable acrylic pressure-sensitive adhesive tape having a multilayer structure composed of (process separator)/(blowing agent-containing pressure-sensitive adhesive layer)/(bubble-bearing microparticle-containing viscoelastic substrate)/(peelable or peel-assisting film)/(bubble-bearing microparticle-containing viscoelastic substrate)/(blowing agent-containing pressure-sensitive adhesive layer)/(process separator) may be prepared, for example, in the following manner.

Two sheets each having a multilayer structure comprised of a bubble-bearing microparticle-containing viscoelastic substrate and a blowing agent-containing pressure-sensitive adhesive layer are prepared by the procedure of Production Embodiment 4 of heat-expandable/peelable acrylic pressure-sensitive adhesive tape.

Next, each one process separator of the two sheets is removed to expose the bubble-bearing microparticle-containing viscoelastic substrates, and the two sheets are sequentially affixed to one side and the other side of a peelable or peel-assisting film, to yield a heat-expandable/peelable acrylic pressure-sensitive adhesive tape having a multilayer structure composed of (process separator)/(blowing agent-containing pressure-sensitive adhesive layer)/(bubble-bearing microparticle-containing viscoelastic substrate)/(peelable or peel-assisting film)/(bubble-bearing microparticle-containing viscoelastic substrate)/(blowing agent-containing pressure-sensitive adhesive layer)/(process separator).

When an exothermic film is used as a peelable or peel-assisting film constituting the peelable or peel-assisting film layer, part of the exothermic film may be arranged off the heat-expandable/peelable acrylic pressure-sensitive adhesive tape, for connecting terminals for energizing (current application).

A coating (application) procedure for use in the application typically of a microparticle-containing polymerizable composition or a blowing agent-containing pressure-sensitive adhesive composition typically to a process separator in these production embodiments is not particularly limited and may be selected from common procedures. Exemplary coating procedures include slot die coating, reverse gravure coating, microgravure coating, dipping, spin coating, brush application, roll coating, and flexographic printing. A coating device for use in the application is not particularly limited and may be selected from commonly used coating devices. Exemplary coating devices include roll coaters such as reverse coaters and gravure coaters; curtain coaters; lip coaters; die coaters; and knife coaters.

Oxygen is blocked by using the process separator 13a and the process separator 13b in the step of photocuring the microparticle-containing polymerizable composition layer 12 and the blowing agent-containing pressure-sensitive adhesive composition layer 11 with active energy rays in respective production embodiments. In stead of using process separators, oxygen may be blocked by using an inactive gas such as nitrogen gas as the atmosphere. Specifically, in an embodiment, the photopolymerization reaction is protected from deterioration due to oxygen, by carrying out application of active energy rays in an atmosphere of an inactive gas such as nitrogen gas. In this embodiment, it is unnecessary to coat or cover the microparticle-containing polymerizable composition layer 12 and the blowing agent-containing pressure-sensitive adhesive composition layer 11 typically with process separators.

It is desirable that the atmosphere of inactive gas, such as nitrogen gas, contains oxygen as less as possible, if used for photocuring of the microparticle-containing polymerizable composition layer 12 and the blowing agent-containing pressure-sensitive adhesive composition layer 11 with active energy rays. Typically, the oxygen concentration in the atmosphere is preferably 5000 ppm or less. If the microparticle-containing polymerizable composition layer 12 and the blowing agent-containing pressure-sensitive adhesive composition layer 11 contain large amounts of dissolved oxygen, free radicals may not form in sufficient amounts and polymerization may not proceed satisfactorily, and the resulting polymer may be insufficient or unsatisfactory in degree of polymerization, molecular weight, and molecular weight distribution.

Exemplary active energy rays include ionizing radiations such as alpha rays, beta rays, gamma rays, neutron beams, and electron beams; and ultraviolet rays, of which ultraviolet rays are preferred. Conditions for the application of active energy rays, such as irradiation energy and irradiation period, are not particularly limited and have only to be such as to activate the photoinitiator and cause a reaction of monomer components. Exemplary conditions for the application of active energy rays include application of an ultraviolet ray having an illumination intensity of 1 to 200

mW/cm$^2$ at wavelengths of 300 to 400 nm in a quantity of about 400 to 4000 mJ/cm$^2$.

Photocuring of the microparticle-containing polymerizable composition layer 12 and the blowing agent-containing pressure-sensitive adhesive composition layer 11 with active energy rays is preferably conducted to a degree of polymerization of 90 percent by weight or more. Unreacted monomers may be removed by providing a drying step. The degree of polymerization may be determined by the procedure as in the degree of polymerization of the partially polymerized prepolymer.

A light source for use in the application of ultraviolet rays may be one having a spectral distribution in a region at wavelength of 180 to 460 nm, and preferably 300 to 400 nm. Exemplary light sources include common irradiation devices such as chemical lamps, "black light" lamps (e.g., products supplied by Toshiba Lighting & Technology Corporation), mercury arc lamps, carbon arc lamps, low-pressure mercury lamps, medium-pressure mercury lamps, high-pressure mercury lamps, ultrahigh-pressure mercury lamps, and metal halide lamps. There may be also used irradiation devices that generate an electromagnetic radiation having a wavelength longer or shorter than the above-mentioned wavelengths.

A desired illumination intensity of ultraviolet rays may be obtained typically by adjusting the distance between the irradiation device as the light source and the microparticle-containing polymerizable composition layer 12 and the blowing agent-containing pressure-sensitive adhesive composition layer 11 as photocurable compositions; and/or controlling the voltage.

Adherends to which the heat-expandable/peelable acrylic pressure-sensitive adhesive tape is used are not particularly limited and may be selected from among adherends having suitable shapes and including suitable materials. Exemplary materials for such adherends include resins such as polycarbonates, polypropylenes, polyesters, polystyrenes, phenol resins, epoxy resins, polyurethanes, acrylonitrile butadiene styrene (ABS) resins, and acrylic resins; and metals such as iron, aluminum, copper, and nickel, and alloys of these metals.

The initial adhesion force of a heat-expandable/peelable acrylic pressure-sensitive adhesive tape may be 6 N/25 mm or more (e.g., 6 to 100 N/25 mm), and preferably 8 N/25 mm or more (e.g., 8 to 80 N/25 mm) in terms of 90-degree peel strength (90-degree peel adhesion) determined with respect to a stainless steel SUS 304 as an adherend, according to the testing method for pressure-sensitive adhesive tape and pressure-sensitive adhesive sheet specified in Japanese Industrial Standards (JIS) Z 0237. The adhesive strength of the heat-expandable/peelable acrylic pressure-sensitive adhesive tape after heating may be 5 N/25 mm or less (e.g., 0 to 5 N/25 mm), and preferably 3 N/25 mm or less (e.g., 0 to 3 N/25 mm) in terms of 90-degree peel strength (90-degree peel adhesion) determined with respect to a stainless steel SUS 304 as an adherend, according to the testing method for pressure-sensitive adhesive tape and pressure-sensitive adhesive sheet specified in JIS Z 0237.

Specifically, the 90-degree peel strength of a heat-expandable/peelable acrylic pressure-sensitive adhesive tape may be determined, for example, by applying a sample pressure-sensitive adhesive tape to a tested article as an adherend through bonding using sufficient pressure at 23°C as a result of one reciprocating movement of a 5-kg roller thereon, aging the resulting article at 23°C for 30 minutes, and peeling the sample heat-expandable/peelable acrylic pressure-sensitive adhesive tape at a peeling direction of 90 degrees and a pulling rate of 50 mm/minute using a tensile tester. The 90-degree peel strength of a heat-expandable/peelable acrylic pressure-sensitive adhesive tape after heating may be determined according to the above testing procedure, except for subjecting the sample adhesive tape to a heating treatment (e.g., a heating treatment at 130°C for 10 minutes) beforehand.

The adhesive performance of a heat-expandable/peelable acrylic pressure-sensitive adhesive tape may be adjusted by suitably setting conditions and parameters such as the components of the blowing agent-containing pressure-sensitive adhesive layer and the microparticle-containing viscoelastic substrate; the type and amount of the blowing agent; the irradiation procedure of active energy rays upon the formation of the blowing agent-containing pressure-sensitive adhesive layer; and the thicknesses of the microparticle-containing viscoelastic substrate and the blowing agent-containing pressure-sensitive adhesive layer.

Typically, JP-A No. 2003-13015 discloses a specific technique of adjusting the adhesion strength by suitably selecting the irradiation procedure of active energy rays. Specifically, JP-A No. 2003-13015 discloses a technique of precisely adjusting the adhesive performance by carrying out application of active energy rays in two or more steps. When ultraviolet rays are used as the active energy rays, exemplary specific processes include a process of carrying out application of ultraviolet rays in two steps including a first step of applying ultraviolet rays at an illumination intensity of 30 mW/cm$^2$ or more, and a second step of applying ultraviolet rays at an illumination intensity lower than that in the first step to thereby substantially complete the polymerization reaction; and a process of carrying out application of ultraviolet rays in three steps including a first step of applying ultraviolet rays at an illumination intensity of 30 mW/cm$^2$ or more, a second step of applying ultraviolet rays at an illumination intensity lower than that in the first step to give a degree of polymerization of at least 70%, and a third step of applying ultraviolet rays at an illumination intensity of 30 mW/cm$^2$ or more to thereby substantially complete the polymerization reaction.

Exemplary ultraviolet-irradiation devices for use in the first step include low-pressure mercury lamps, high-pressure mercury lamps, ultrahigh-pressure mercury lamps, and metal halide lamps; and those for use in the second step include chemical lamps and black light lamps.

Heat-expandable/peelable acrylic pressure-sensitive adhesive tapes according to embodiments of the present invention have such adhesive strength as above and can thereby maintain a high adhesion strength upon bonding to form a bonded part with an adherend, and they can be easily separated or debonded at the bonded part by heating, since the heating allows the blowing agent in the blowing agent-containing pressure-sensitive adhesive layer to expand or foam to cause expansion and deformation of the blowing agent-containing pressure-sensitive adhesive layer, and this causes peeling at the interface between the blowing agent-containing pressure-sensitive adhesive layer and the peelable or peel-assisting film. When the blowing agent-containing pressure-sensitive adhesive layer adheres to an adherend of certain materials, peeling may occur at the interface between the blowing agent-containing pressure-sensitive adhesive layer and the adherend, and the tape can be easily separated or debonded.

The heat-expandable/peelable acrylic pressure-sensitive adhesive tapes according to embodiments of the present invention may be used in a variety of uses, such as in bonds of parts, typically in automobiles, machine parts, electrical appliances, and construction materials. In addition, they may be used as pressure-sensitive adhesive tapes that are easily removable from adherends, because they can be easily separated or debonded by heating, as has been mentioned above. Furthermore, they can also be used as pressure-sensitive adhesive sheets in the form typically of sheets or tapes.

Examples

The present invention will be illustrated in further detail with reference to several examples below.

Preparation Example 1 of Thermally Expanding Agent-Containing Pressure-Sensitive Adhesive Composition

A partially polymerized monomer syrup (prepolymer syrup) having a degree of polymerization of 7% was prepared by mixing 90 parts by weight of 2-ethylhexyl acrylate, 10 parts by weight of acrylic acid, 0.05 part by weight of a photoinitiator (trade name: "Irgacure 184" supplied by Ciba Specialty Chemicals Corporation), and 0.05 part by weight of another photoinitiator (trade name: "Irgacure 651" supplied by Ciba Specialty Chemicals Corporation) in a four-necked flask, and exposing the mixture to ultraviolet rays in an atmosphere of nitrogen gas to carry out photopolymerization. With 100 parts by weight of the prepared partially polymerized monomer syrup were homogenously mixed 30 parts by weight of a blowing agent (heat-expandable microspheres, trade name: "Matsumoto Microsphere F-50D" supplied by Matsumoto Yushi-Seiyaku Co., Ltd.) and 0.5 part by weight of trimethylolpropane triacrylate, to give a blowing agent-containing pressure-sensitive adhesive composition (hereinafter also referred to as "blowing agent-containing pressure-sensitive adhesive composition (A)").

Preparation Example 2 of Thermally Expanding Agent-Containing Pressure-Sensitive Adhesive Composition

A partially polymerized monomer syrup having a degree of polymerization of 7% was prepared by mixing 90 parts by weight of 2-ethylhexyl acrylate, 10 parts by weight of acrylic acid, 0.05 part by weight of a photoinitiator (trade name: "Irgacure 184" supplied by Ciba Specialty Chemicals Corporation), and 0.05 part by weight of another photoinitiator (trade name: "Irgacure 651" supplied by Ciba Specialty Chemicals Corporation) in a four-necked flask, and exposing the mixture to ultraviolet rays in an atmosphere of nitrogen gas to carry out photopolymerization. With 100 parts by weight of the prepared partially polymerized monomer syrup were homogenously mixed 30 parts by weight of a blowing agent (heat-expandable microspheres, trade name: "Matsumoto Microsphere F-50D" supplied by Matsumoto Yushi-Seiyaku Co., Ltd.) and 0.2 part by weight of trimethylolpropane triacrylate, to give a blowing agent-containing pressure-sensitive adhesive composition (hereinafter also referred to as "blowing agent-containing pressure-sensitive adhesive composition (B)").

Preparation Example 1 of Bubble-Bearing Microparticle-Containing Polymerizable Composition

A partially polymerized monomer syrup having a degree of polymerization of 7% was prepared by mixing 90 parts by weight of 2-ethylhexyl acrylate, 10 parts by weight of acrylic acid, 0.05 part by weight of a photoinitiator (trade name: "Irgacure 184" supplied by Ciba Specialty Chemicals Corporation), and 0.05 part by weight of another photoinitiator (trade name: "Irgacure 651" supplied by Ciba Specialty Chemicals Corporation) in a four-necked flask, and exposing the mixture to ultraviolet rays in an atmosphere of nitrogen gas to carry out photopolymerization. With 100 parts by weight of the prepared partially polymerized monomer syrup were homogenously mixed 0.08 part by weight of 1,6-hexanediol diacrylate, 9.5 parts by weight of hollow glass beads (trade name: "CEL-STAR Z-27" supplied by Tokai Kogyo Co., Ltd., having an average particle diameter of 63 $\mu$m and a true density of 0.26 g/cm$^3$), and 0.5 part by weight of a fluorochemical surfactant (trade name: "Unidyne TG-656" supplied by Daikin Industries, Ltd.) using a propeller mixer; the mixture was placed into a beaker; nitrogen gas was bubbled from the bottom of the beaker; the bubbles and the mixture were admixed using a Homo-mixer so as to take the bubbles in the mixture, and thereby yielded a bubble-bearing microparticle-containing polymerizable composition (hereinafter also referred to as "bubble-bearing microparticle-containing polymerizable composition (A)").

Preparation Example 1 of Microparticle-Containing Polymerizable Composition

A partially polymerized monomer syrup having a degree of polymerization of 7% was prepared by mixing 90 parts by weight of 2-ethylhexyl acrylate, 10 parts by weight of acrylic acid, 0.05 part by weight of a photoinitiator (trade name: "Irgacure 184" supplied by Ciba Specialty Chemicals Corporation), and 0.05 part by weight of another photoinitiator (trade name: "Irgacure 651" supplied by Ciba Specialty Chemicals Corporation) in a four-necked flask, and exposing the mixture to ultraviolet rays in an atmosphere of nitrogen gas to carry out photopolymerization.
With 100 parts by weight of the prepared partially polymerized monomer syrup were homogenously mixed, using a propeller mixer, 0.08 part by weight of 1,6-hexanediol diacrylate and 9.5 parts by weight of hollow glass beads (trade name: "CEL-STAR Z-27" supplied by Tokai Kogyo Co., Ltd., having an average particle diameter of 63 $\mu$m and a true density of 0.26 g/cm$^3$) and thereby yielded a microparticle-containing polymerizable composition (hereinafter also referred to as "microparticle-containing polymerizable composition (A)").

Example 1 of Process Separator To Be Used

A polyester film (trade name: "MRN-38" supplied by Mitsubishi Plastics, Inc.), one side of which had been subjected to release treatment with a silicon release agent, was used as a process separator (hereinafter also referred to as "process separator (A)").

Example 2 of Process Separator To Be Used

A polyester film (trade name: "MRF-38" supplied by Mitsubishi Plastics, Inc.), one side of which had been subjected to release treatment with a silicon release agent, was used as a process separator (hereinafter also referred to as "process separator (B)").

Example 1 of Peelable or Peel-Assisting Film To Be Used

A polyester film (trade name: "Lumirror S-10" supplied by Toray Industries, Inc., having a thickness of 12 $\mu$m) was used as a peelable or peel-assisting film (hereinafter also referred to as "peelable or peel-assisting film (A)").

Example 2 of Peelable or Peel-Assisting Film To Be Used

An aluminum foil (having a resistance of 1.0$\Omega$/50 W and a thickness of 20 $\mu$m) was used as a peelable or peel-assisting film (hereinafter also referred to as "peelable or peel-assisting film (B)").

Example 3 of Peelable or Peel-Assisting Film To Be Used

A planar heating element (a sheet heating element about 0.5 mm thick, comprised of a nickel-chromium alloy covered by a silicon rubber containing a glass cloth) was used as a peelable or peel-assisting film (hereinafter also referred to as "peelable or peel-assisting film (C)")

Example 1

A blowing agent-containing pressure-sensitive adhesive composition (A) was applied to a release-treated surface of a process separator (B) so as to give a layer with a thickness after curing of 100 $\mu$m and thereby yielded a blowing agent-containing pressure-sensitive adhesive composition layer sheet including the process separator (B) and, arranged thereon, a blowing agent-containing pressure-sensitive adhesive composition layer.
Separately, a bubble-bearing microparticle-containing polymerizable composition (A) was applied to a release-treated surface of a process separator (A) so as to give a layer with a thickness after curing of 800 $\mu$m, and thereby yielded a bubble-bearing microparticle-containing polymerizable composition layer sheet including the process separator (A) and, arranged thereon, a bubble-bearing microparticle-containing polymerizable composition layer.
The bubble-bearing microparticle-containing polymerizable composition layer sheet was affixed to one side of a peelable or peel-assisting film (A) so that the bubble-bearing microparticle-containing polymerizable composition layer was in contact with the peelable or peel-assisting film (A); the blowing agent-containing pressure-sensitive adhesive composition layer sheet was affixed to the other side of the peelable or peel-assisting film (A) so that the blowing agent-containing pressure-sensitive adhesive composition layer was in contact with the peelable or peel-assisting film (A), and thereby yielded a sheet assembly.

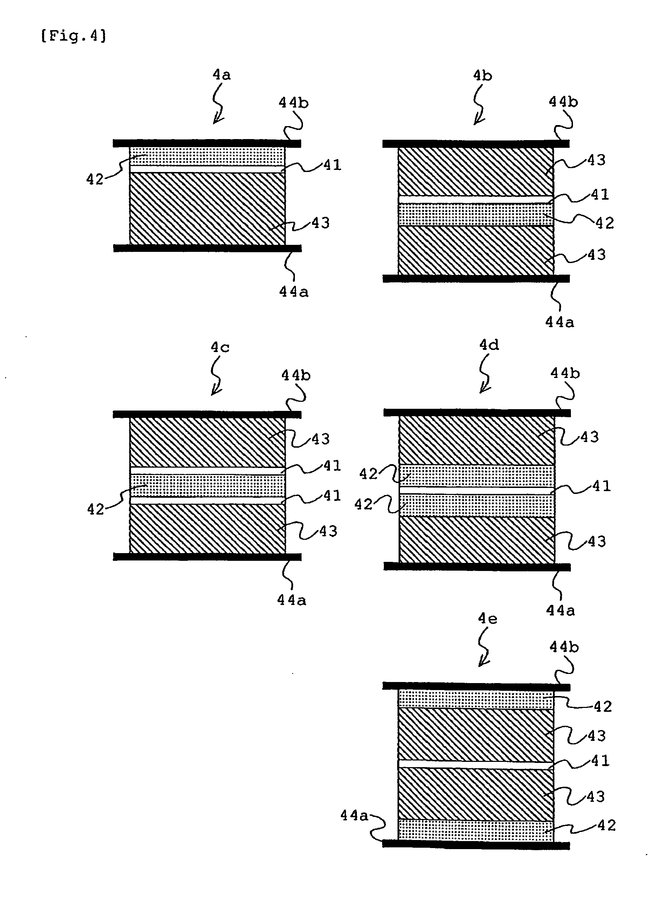

Ultraviolet rays (UV) having a maximum sensitivity at 350 nm were applied from a black light lamp (supplied by Toshiba Lighting & Technology Corporation) to both sides of the sheet assembly at an illumination intensity of 5 mW/cm$^2$ for 240 seconds to photocure the bubble-bearing microparticle-containing polymerizable composition and the blowing agent-containing pressure-sensitive adhesive composition, and thereby yielded a pressure-sensitive adhesive sheet. This sheet included the peelable or peel-assisting film (A), arranged on one side thereof, a bubble-bearing microparticle-containing viscoelastic substrate, and arranged on the other side, a blowing agent-containing pressure-sensitive adhesive layer (the configuration of 4a in Fig. 4). The pressure-sensitive adhesive sheet may also be used as a pressure-sensitive adhesive double-coated sheet, because its bubble-bearing microparticle-containing viscoelastic substrates have adhesiveness (tackiness). The blowing agent-containing pressure-sensitive adhesive layer of the pressure-sensitive adhesive sheet had a solvent-insoluble content of 88 percent by weight.

Example 2

A bubble-bearing microparticle-containing polymerizable composition (A) was applied to a release-treated surface of a process separator (B) so as to give a layer with a thickness after curing of 400 $\mu$m and thereby yielded a bubble-bearing microparticle-containing polymerizable composition layer sheet including the process separator (B) and, arranged thereon, a bubble-bearing microparticle-containing polymerizable composition layer.

Separately, a blowing agent-containing pressure-sensitive adhesive composition (A) was applied to one side of a peelable or peel-assisting film (A), so as to give a layer with a thickness after curing of 100 $\mu$m, and thereby yielded a sheet including the peelable or peel-assisting film (A) and, arranged thereon, a blowing agent-containing pressure-sensitive adhesive composition layer.

Additionally, a bubble-bearing microparticle-containing polymerizable composition (A) was applied to a release-treated surface of another process separator (A) so as to give a layer with a thickness after curing of 400 $\mu$m, and thereby yielded a bubble-bearing microparticle-containing polymerizable composition layer sheet including the process separator (A) and, arranged thereon, a bubble-bearing microparticle-containing polymerizable composition layer.

The bubble-bearing microparticle-containing polymerizable composition layer sheet, which included the process separator (B) and, arranged thereon, the bubble-bearing microparticle-containing polymerizable composition layer, was affixed to the sheet including the peelable or peel-assisting film (A) and the blowing agent-containing pressure-sensitive adhesive composition layer so that the peelable or peel-assisting film (A) was in contact with the bubble-bearing microparticle-containing polymerizable composition layer; the bubble-bearing microparticle-containing polymerizable composition layer sheet, which included the process separator (A) and, arranged thereon, the bubble-bearing microparticle-containing polymerizable composition layer, was affixed to the sheet including the peelable or peel-assisting film (A) and the blowing agent-containing pressure-sensitive adhesive composition layer so that the blowing agent-containing pressure-sensitive adhesive composition layer was in contact with the bubble-bearing microparticle-containing polymerizable composition layer; and thereby yielded a sheet assembly.

Ultraviolet rays (UV) having a maximum sensitivity at 350 nm were applied from a black light lamp (supplied by Toshiba Lighting & Technology Corporation) to both sides of the sheet assembly at an illumination intensity of 5 mW/cm$^2$ for 240 seconds to photocure the bubble-bearing microparticle-containing polymerizable composition and the blowing agent-containing pressure-sensitive adhesive composition, and thereby yielded a pressure-sensitive adhesive sheet. This sheet included the peelable or peel-assisting film (A); arranged on one side thereof, a bubble-bearing microparticle-containing viscoelastic substrate; and arranged on the other side, a multilayer structure composed of a blowing agent-containing pressure-sensitive adhesive layer and another bubble-bearing microparticle-containing viscoelastic substrate (the configuration of 4b in FIG. 4). The pressure-sensitive adhesive sheet may also be used as a pressure-sensitive adhesive double-coated sheet, because its bubble-bearing microparticle-containing viscoelastic substrates have adhesiveness (tackiness). The blowing agent-containing pressure-sensitive adhesive layer of the pressure-sensitive adhesive sheet had a solvent-insoluble content of 86 percent by weight.

Example 3

A pressure-sensitive adhesive sheet was prepared by the procedure of Example 2, except for applying a blowing agent-containing pressure-sensitive adhesive composition (A) to one side of a peelable or peel-assisting film (A) to form a blowing agent-containing pressure-sensitive adhesive composition layer with a thickness after curing of 50 $\mu$m on the peelable or peel-assisting film (A) to thereby give a sheet including the peelable or peel-assisting film (A) and the blowing agent-containing pressure-sensitive adhesive composition layer. The prepared pressure-sensitive adhesive sheet included the peelable or peel-assisting film (A); arranged on one side thereof, a bubble-bearing microparticle-containing viscoelastic substrate; and arranged on the other side, a multilayer structure composed of a blowing agent-containing pressure-sensitive adhesive layer and another bubble-bearing microparticle-containing viscoelastic substrate (the configuration of 4b in FIG. 4). The pressure-sensitive adhesive sheet may also be used as a pressure-sensitive adhesive double-coated sheet, because its bubble-bearing microparticle-containing viscoelastic substrates have adhesiveness (tackiness). The blowing agent-containing pressure-sensitive adhesive layer of the pressure-sensitive adhesive sheet had a solvent-insoluble content of 85 percent by weight.

Example 4

A pressure-sensitive adhesive sheet was prepared by the procedure of Example 2, except for applying a blowing agent-containing pressure-sensitive adhesive composition (B) to one side of a peelable or peel-assisting film (A) to form a blowing agent-containing pressure-sensitive adhesive composition layer on the peelable or peel-assisting film (A) to thereby give a sheet including the peelable or peel-assisting film (A) and the blowing agent-containing pressure-sensitive adhesive composition layer. The prepared pressure-sensitive adhesive sheet included the peelable or peel-assisting film (A); arranged on one side thereof, a bubble-bearing microparticle-containing viscoelastic substrate; and arranged on the other side, a multilayer structure composed of a blowing agent-containing pressure-sensitive adhesive layer and another bubble-bearing microparticle-containing viscoelastic substrate (the configuration of 4b in FIG. 4). The pressure-sensitive adhesive sheet may also be used as a pressure-sensitive adhesive double-coated sheet, because its bubble-bearing microparticle-containing viscoelastic substrates have adhesiveness (tackiness). The blowing agent-containing pressure-sensitive adhesive layer of the pressure-sensitive adhesive sheet had a solvent-insoluble content of 82 percent by weight.

Example 5

A pressure-sensitive adhesive sheet was prepared by the procedure of Example 2, except for applying, instead of the bubble-bearing microparticle-containing polymerizable composition (A), a microparticle-containing polymerizable composition (A) to a release-treated surface of a process separator (B) to give a microparticle-containing polymerizable composition layer sheet including the process separator (B) and, arranged thereon, a microparticle-containing polymerizable composition layer, and applying, instead of the bubble-bearing microparticle-containing polymerizable composition (A), a microparticle-containing polymerizable composition (A) to a release-treated surface of a process separator (A) to give a microparticle-containing polymerizable composition layer sheet including the process separator (A) and, arranged thereon, a microparticle-containing polymerizable composition layer. The prepared pressure-sensitive adhesive sheet included the peelable or peel-assisting film (A); arranged on one side thereof, a microparticle-containing viscoelastic substrate; and arranged on the other side, a multilayer structure composed of a blowing agent-containing pressure-sensitive adhesive layer and another microparticle-containing viscoelastic substrate (the configuration of 4b in FIG. 4). The pressure-sensitive adhesive sheet may also be used as a pressure-sensitive adhesive double-coated sheet, because its microparticle-containing viscoelastic substrates have adhesiveness (tackiness). The blowing agent-containing pressure-sensitive adhesive layer of the pressure-sensitive adhesive sheet had a solvent-insoluble content of 81 percent by weight.

Example 6

A bubble-bearing microparticle-containing polymerizable composition (A) was applied to a release-treated surface of a process separator (B) so as to give a layer with a thickness after curing of 400 $\mu$m and thereby yielded a bubble-bearing microparticle-containing polymerizable composition layer sheet including the process separator (B) and, arranged thereon, a bubble-bearing microparticle-containing polymerizable composition layer.
A blowing agent-containing pressure-sensitive adhesive composition (A) was applied to one side of a peelable or peel-assisting film (A), so as to give a layer with a thickness after curing of 100 $\mu$m, and thereby yielded a blowing agent-containing pressure-sensitive adhesive composition layer, and another peelable or peel-assisting film (A) was affixed to the blowing agent-containing pressure-sensitive adhesive composition layer and thereby yielded a sheet including the blowing agent-containing pressure-sensitive adhesive composition layer and arranged on both sides thereof, the peelable or peel-assisting films (A).
A bubble-bearing microparticle-containing polymerizable composition (A) was applied to a release-treated surface of a process separator (A) so as to give a layer with a thickness after curing of 400 $\mu$m and thereby yielded a bubble-bearing microparticle-containing polymerizable composition layer sheet including the process separator (A) and, arranged thereon, a bubble-bearing microparticle-containing polymerizable composition layer.
Next, a sheet assembly was prepared by affixing the bubble-bearing microparticle-containing polymerizable composition layer sheet, which included the process separator (B) and, arranged thereon, the bubble-bearing microparticle-containing polymerizable composition layer, to one peelable or peel-assisting film (A) of the sheet including the blowing agent-containing pressure-sensitive adhesive composition layer and, arranged on both sides thereof, the peelable or peel-assisting films (A) so that the one peelable or peel-assisting film (A) was in contact with the bubble-bearing microparticle-containing polymerizable composition layer; and affixing the bubble-bearing microparticle-containing polymerizable composition layer sheet, which included the process separator (A) and, arranged thereon, the bubble-bearing microparticle-containing polymerizable composition layer, to the other peelable or peel-assisting film (A) of the sheet so that the other peelable or peel-assisting film (A) was in contact with the bubble-bearing microparticle-containing polymerizable composition layer.

Ultraviolet rays (UV) having a maximum sensitivity at 350 nm were applied from a black light lamp (supplied by Toshiba Lighting & Technology Corporation) to both sides of the sheet assembly at an illumination intensity of 5 mW/cm$^2$ for 240 seconds to photocure the bubble-bearing microparticle-containing polymerizable composition and the blowing agent-containing pressure-sensitive adhesive composition and thereby yielded a pressure-sensitive adhesive sheet. This sheet included a blowing agent-containing pressure-sensitive adhesive layer; arranged on one side thereof, a multilayer structure composed of a peelable or peel-assisting film and a bubble-bearing microparticle-containing viscoelastic substrate; and, arranged on the other side, another multilayer structure composed of a peelable or peel-assisting film and a bubble-bearing microparticle-containing viscoelastic substrate (the configuration of 4c in FIG. 4). The pressure-sensitive adhesive sheet may also be used as a pressure-sensitive adhesive double-coated sheet, because its bubble-bearing microparticle-containing viscoelastic substrates have adhesiveness (tackiness). The blowing agent-containing pressure-sensitive adhesive layer of the pressure-sensitive adhesive sheet had a solvent-insoluble content of 85 percent by weight.

Example 7

A pressure-sensitive adhesive sheet was prepared by the procedure of Example 1, except for using an aluminum foil (having a resistance of 1.0 Ω/50 W and a thickness of 20 μm), as a peelable or peel-assisting film (B), instead of the peelable or peel-assisting film (A). The pressure-sensitive adhesive sheet included the aluminum foil; arranged on one side thereof, a bubble-bearing microparticle-containing viscoelastic substrate; and arranged on the other side, a blowing agent-containing pressure-sensitive adhesive layer (the configuration of 4a in FIG. 4). The pressure-sensitive adhesive sheet may also be used as a pressure-sensitive adhesive double-coated sheet, because its bubble-bearing microparticle-containing viscoelastic substrates have adhesiveness (tackiness).

Example 8

A pressure-sensitive adhesive sheet was prepared by the procedure of Example 2, except for using an aluminum foil (having a resistance of 1.0 Ω/50 W and a thickness of 20 μm), as a peelable or peel-assisting film (B), instead of the peelable or peel-assisting film (A). The pressure-sensitive adhesive sheet included the aluminum foil; arranged on one side thereof, a bubble-bearing microparticle-containing viscoelastic substrate; and arranged on the other side, a multilayer structure composed of a blowing agent-containing pressure-sensitive adhesive layer and a bubble-bearing microparticle-containing viscoelastic substrate (the configuration of 4b in FIG. 4). The pressure-sensitive adhesive sheet may also be used as a pressure-sensitive adhesive double-coated sheet, because its bubble-bearing microparticle-containing viscoelastic substrates have adhesiveness (tackiness).

Example 9

A pressure-sensitive adhesive sheet was prepared by the procedure of Example 6, except for using an aluminum foil (having a resistance of 1.0 Ω/50 W and a thickness of 20 μm), as a peelable or peel-assisting film (B), instead of the peelable or peel-assisting film (A). The pressure-sensitive adhesive sheet included a blowing agent-containing pressure-sensitive adhesive layer; arranged on one side thereof, a multilayer structure composed of the aluminum foil and a bubble-bearing microparticle-containing viscoelastic substrate; and arranged on the other side, another multilayer structure composed of the aluminum foil and a bubble-bearing microparticle-containing viscoelastic substrate (the configuration of 4c in FIG. 4). The pressure-sensitive adhesive sheet may also be used as a pressure-sensitive adhesive double-coated sheet, because its bubble-bearing microparticle-containing viscoelastic substrates have adhesiveness (tackiness).

Example 10

A bubble-bearing microparticle-containing polymerizable composition (A) was applied to a release-treated surface of a process separator (B) so as to give a layer with a thickness after curing of 400 μm, and thereby yielded a bubble-bearing microparticle-containing polymerizable composition layer sheet including the process separator (B) and, arranged thereon, a bubble-bearing microparticle-containing polymerizable composition layer.

A blowing agent-containing pressure-sensitive adhesive composition (A) was applied to a release-treated surface of a process separator (A) so as to give a layer with a thickness after curing of 100 $\mu$m, and thereby yielded a blowing agent-containing pressure-sensitive adhesive composition layer sheet including the process separator (A) and, arranged thereon, a blowing agent-containing pressure-sensitive adhesive composition layer.

Next, a sheet assembly was prepared by affixing the blowing agent-containing pressure-sensitive adhesive composition layer sheet, which included the process separator (A) and, arranged thereon, the blowing agent-containing pressure-sensitive adhesive composition layer, to the bubble-bearing microparticle-containing polymerizable composition layer sheet, which included the process separator (B) and, arranged thereon, the bubble-bearing microparticle-containing polymerizable composition layer, so that the bubble-bearing microparticle-containing polymerizable composition layer was in contact with the blowing agent-containing pressure-sensitive adhesive composition layer.

Ultraviolet rays (UV) having a maximum sensitivity at 350 nm were applied from a black light lamp (supplied by Toshiba Lighting & Technology Corporation) to both sides of the sheet assembly at an illumination intensity of 5 mW/cm$^2$ for 240 seconds to photocure the bubble-bearing microparticle-containing polymerizable composition and the blowing agent-containing pressure-sensitive adhesive composition to thereby yield a sheet. This sheet had a multilayer structure composed of a bubble-bearing microparticle-containing viscoelastic substrate and a blowing agent-containing pressure-sensitive adhesive layer.

Additionally, another sheet was prepared by the above procedure. The resulting sheet had a multilayer structure composed of a bubble-bearing microparticle-containing viscoelastic substrate and a blowing agent-containing pressure-sensitive adhesive layer.

Of the process separators of the sheet including the multilayer structure composed of a bubble-bearing microparticle-containing viscoelastic substrate and a blowing agent-containing pressure-sensitive adhesive layer, the process separator (A) in contact with the blowing agent-containing pressure-sensitive adhesive layer was removed; an aluminum foil (having a resistance of 1.0$\Omega$/50 W and a thickness of 20 $\mu$m) was applied to the exposed blowing agent-containing pressure-sensitive adhesive layer; separately, the process separator (A) in contact with the blowing agent-containing pressure-sensitive adhesive layer of the other sheet was removed to expose the blowing agent-containing pressure-sensitive adhesive layer, and the exposed blowing agent-containing pressure-sensitive adhesive layer of the other sheet was affixed to the other side of the aluminum foil; and thereby yielded a sheet. This sheet had a multilayer structure of (process separator (B))/(bubble-bearing microparticle-containing viscoelastic substrate)/(blowing agent-containing pressure-sensitive adhesive layer)/(aluminum foil)/(blowing agent-containing pressure-sensitive adhesive layer)/(bubble-bearing microparticle-containing viscoelastic substrate)/(process separator (B)) (the configuration of 4d in FIG. 4).

In this procedure, the aluminum foil was affixed, by using a hand roller, to the sheets each having a multilayer structure composed of the bubble-bearing microparticle-containing viscoelastic substrate and the blowing agent-containing pressure-sensitive adhesive layer. The prepared pressure-sensitive adhesive sheet may also be used as a pressure-sensitive adhesive double-coated sheet, because its bubble-bearing microparticle-containing viscoelastic substrates have adhesiveness (tackiness).

Example 11

Two sheets each having a multilayer structure composed of a bubble-bearing microparticle-containing viscoelastic substrate and a blowing agent-containing pressure-sensitive adhesive layer were prepared by the procedure of Example 10.

Of the process separators of the sheet including the multilayer structure composed of a bubble-bearing microparticle-containing viscoelastic substrate and a blowing agent-containing pressure-sensitive adhesive layer, the process separator (B) in contact with the bubble-bearing microparticle-containing viscoelastic substrate was removed to expose the bubble-bearing microparticle-containing viscoelastic substrate, and the exposed bubble-bearing microparticle-containing viscoelastic substrate was affixed to one side of an aluminum foil (having a resistance of 1.0 $\Omega$/50 W and a thickness of 20 $\mu$m); separately, the process separator (B) in contact with the bubble-bearing microparticle-containing viscoelastic substrate was removed to expose the bubble-bearing microparticle-containing viscoelastic substrate, and the exposed bubble-bearing microparticle-containing viscoelastic substrate of the other sheet was affixed to the other side of the aluminum foil; and thereby yielded a sheet. The prepared sheet had a multilayer structure of (process separator (A))/ (blowing agent-containing pressure-sensitive adhesive layer)/(bubble-bearing microparticle-containing viscoelastic substrate)/(aluminum foil)/(bubble-bearing microparticle-containing viscoelastic substrate)/(blowing agent-containing pressure-sensitive adhesive layer)/(process separator (A)) (the configuration of 4e in FIG. 4). In this procedure, the aluminum foil was affixed, by using a hand roller, to the sheets each having a multilayer structure composed of a bubble-bearing microparticle-containing viscoelastic substrate and a blowing agent-containing pressure-sensitive adhesive layer.

Example 12

A sheet was prepared by the procedure of Example 10, except for using, instead of the aluminum foil, a planar heating element (a sheet heating element having a thickness of about 0.5 mm and comprised of a nickel-chromium alloy covered by a silicon rubber containing a glass cloth; peelable or peel-assisting film (C)). The prepared sheet had a multilayer structure of (process separator (B))/(bubble-bearing microparticle-containing viscoelastic substrate)/(blowing agent-containing pressure-sensitive adhesive layer)/(planar heating element)/(blowing agent-containing pressure-sensitive adhesive layer)/(bubble-bearing microparticle-containing viscoelastic substrate)/(process separator (B)) (the configuration of 4d in FIG. 4). The sheet may also be used as a pressure-sensitive adhesive double-coated sheet, because its bubble-bearing microparticle-containing viscoelastic substrates have adhesiveness (tackiness).

Example 13

A sheet was prepared by the procedure of Example 11, except for using, instead of the aluminum foil, a planar heating element (a sheet heating element having a thickness of about 0.5 mm and comprised of a nickel-chromium alloy covered by a silicon rubber containing a glass cloth; peelable or peel-assisting film (C)). The prepared sheet had a multilayer structure of (process separator (A))/(blowing agent-containing pressure-sensitive adhesive layer)/(bubble-bearing microparticle-containing viscoelastic substrate)/(planar heating element)/(bubble-bearing microparticle-containing viscoelastic substrate)/(blowing agent-containing pressure-sensitive adhesive layer)/(process separator (A)) (the configuration of 4e in FIG. 4).

Comparative Example 1

A sheet assembly was prepared by applying a bubble-bearing microparticle-containing polymerizable composition (A) to a release-treated surface of a process separator (A) to form a bubble-bearing microparticle-containing polymerizable composition layer with a thickness after curing of 800 $\mu$m on the process separator (A); and affixing a process separator (B) to the bubble-bearing microparticle-containing polymerizable composition layer so that a release-treated surface of the process separator (B) was in contact with the layer surface.
Ultraviolet rays (UV) having a maximum sensitivity at 350 nm were applied from a black light lamp (supplied by Toshiba Lighting & Technology Corporation) to both sides of the sheet assembly at an illumination intensity of 5 mW/cm$^2$ for 240 seconds, to photocure the bubble-bearing microparticle-containing polymerizable composition, and thereby yielded a sheet including a bubble-bearing microparticle-containing viscoelastic substrate covered by the process separator (A) and the process separator (B). The microparticle-containing viscoelastic substrate of the sheet has adhesiveness (tackiness).

Comparative Example 2

A sheet was prepared by the procedure of Comparative Example 1, except for applying a bubble-bearing microparticle-containing polymerizable composition (A) to a release-treated surface of a process separator (A) to give a bubble-bearing microparticle-containing polymerizable composition layer with a thickness after curing of 400 $\mu$m on the process separator (A). The prepared sheet included a bubble-bearing microparticle-containing viscoelastic substrate covered by the process separator (A) and the process separator (B). The bubble-bearing microparticle-containing viscoelastic substrate of the sheet has adhesiveness (tackiness).

Comparative Example 3

A blowing agent-containing pressure-sensitive adhesive composition (A) was applied to a release-treated surface of a process separator (B) to give a blowing agent-containing pressure-sensitive adhesive composition layer sheet including the process separator (B) and, arranged thereon, a blowing agent-containing pressure-sensitive adhesive composition layer with a thickness after curing of 100 $\mu$m.
A bubble-bearing microparticle-containing polymerizable composition (A) was applied to a release-treated surface of a process separator (A), to give a bubble-bearing microparticle-containing polymerizable composition layer sheet including the process separator (A) and, arranged thereon, a bubble-bearing microparticle-containing polymerizable composition layer with a thickness after curing of 800 $\mu$m.
Next, a sheet assembly was prepared by affixing the blowing agent-containing pressure-sensitive adhesive composition layer sheet to the bubble-bearing microparticle-containing polymerizable composition layer sheet so that the blowing agent-containing pressure-sensitive adhesive composition layer was in contact with the bubble-bearing microparticle-containing polymerizable composition layer.

Ultraviolet rays (UV) having a maximum sensitivity at 350 nm were applied from a black light lamp (supplied by Toshiba Lighting & Technology Corporation) to both sides of the sheet assembly at an illumination intensity of 5 mW/cm$^2$ for 240 seconds to photocure the bubble-bearing microparticle-containing polymerizable composition and the blowing agent-containing pressure-sensitive adhesive composition to thereby give a sheet. This sheet included a bubble-bearing microparticle-containing viscoelastic substrate and, arranged on one side thereof, a blowing agent-containing pressure-sensitive adhesive composition layer. The sheet may also be used as a pressure-sensitive adhesive double-coated sheet, because its bubble-bearing microparticle-containing viscoelastic substrate has adhesiveness (tackiness). The blowing agent-containing pressure-sensitive adhesive layer of the pressure-sensitive adhesive sheet had a solvent-insoluble content of 86 percent by weight.

Evaluation 1

The sheets prepared in Examples 1 to 6 and Comparative Examples 1 to 3 were measured on initial (dry) adhesive strength and adhesive strength after heating with respect to respective adherends, according to the following technique of measuring initial adhesive strength and the technique of measuring adhesive strength after heating, and additionally, the debonding capability were evaluated. The results in measurements and evaluations are shown in Table 1.

Evaluation on Debonding Capability

A test sample was evaluated as having good debonding capability when the test sample peeled off from the adherend as a result of a heating treatment (heating at 130°C for 10 minutes); when the test sample after the heating treatment showed a 90-degree peel strength to the adherend of less than 5 N/25 mm as determined according to the following technique of measuring adhesive strength after heating; or when the test sample after the heating treatment underwent peeling at the interface between the peelable or peel-assisting film and the blowing agent-containing pressure-sensitive adhesive layer. In contrast, a test sample was evaluated as having poor debonding capability when the test sample after the heating treatment showed a 90-degree peel strength of 5 N/25 mm or more.

Detailed Evaluation of Debonding Capability

(Peelability)

Of samples evaluated as having good debonding capability (Good), one undergoing peeling at the interface between a blowing agent-containing pressure-sensitive adhesive layer and the adherend was evaluated as "Good (1)"; one undergoing peeling at the interface between a blowing agent-containing pressure-sensitive adhesive layer and a peelable or peel-assisting film was evaluated as "Good (2)"; one having two or more multilayer structures composed of a peelable or peel-assisting film and a blowing agent-containing pressure-sensitive adhesive layer and undergoing peeling at all the interfaces between a blowing agent-containing pressure-sensitive adhesive layer and a peelable or peel-assisting film was evaluated as "Good (3)"; and one undergoing peeling at the interface between a blowing agent-containing pressure-sensitive adhesive layer and the adherend and at the interface between a blowing agent-containing pressure-sensitive adhesive layer and a peelable or peel-assisting film was evaluated as "Good (4)".
Adherends used herein are an acrylic plate (trade name: "ACRYLITE" supplied by Mitsubishi Rayon Co., Ltd.), a polycarbonate plate (PC plate) (trade name: "Polycarbonate Plate" supplied by Takiron Co., Ltd.), an ABS plate (supplied by Shin-Kobe Electric Machinery Co., Ltd.), a polystyrene plate (PS plate) (supplied by RP TOPLA Limited), and a stainless steel plate (SUS 304 plate) (Nippon Testpanel Co., Ltd.). These adherends had been washed on their surface with alcohol (ethanol) before use.

Preparation of Test Samples

For each of the sheets prepared in Examples and Comparative Examples, the process separator (A) was removed to expose an adhesive surface, and to the exposed adhesive surface was affixed, using a laminator roll, a poly (ethylene terephthalate) film (PET film; supplied by Toray Industries, Inc. under the trade name of "Lumirror #50") 50 μm thick having a surface treated with corona on one side thereof so that the corona-treated surface was in contact with the adhesive face, and the laminate was cut to a width of 25 mm to give a series of test samples as pressure-sensitive adhesive sheets having a thickness of 38 μm and supported on the corona-treated surface of the PET film.

The prepared test samples were used in the measurements of the initial adhesive strength and the adhesive strength after heating as below.

Technique for Measuring Initial Adhesive Strength

A test sample was applied to an adherend through bonding using sufficient pressure in an atmosphere at 23°C as a result of one reciprocating movement of a 5-kg roller thereon, aged at 23°C for 30 minutes, and peeled off from the adherend at a peeling direction of 90 degrees and a pulling rate of 50 mm/min using a tensile tester (trade name: "TG-1kN" supplied by Minebea Co., Ltd.) in an atmosphere at 23°C to determine a 90-degree peel strength as the initial adhesive strength.

Technique for Measuring Adhesive Strength After Heating

A test sample was applied to an adherend through bonding using sufficient pressure in an atmosphere at 23°C as a result of one reciprocating movement of a 5-kg roller thereon, aged at 23°C for 30 minutes, and the article including the test sample adhered to the adhered as intact was placed in an air forced oven and heat-treated at 130°C for 10 minutes. After the completion of heating treatment, the test sample was observed whether it was peeled off from the adherend by expansion or foaming of the blowing agent as a result of heating. When the sample remained adhered to the adherend without peeling, the test sample was left stand in an atmosphere of 23°C for 2 hours and then peeled off from the adherend at a peeling direction of 90 degrees and a pulling rate of 50 mm/min using a tensile tester (trade name: "TG-1kN" supplied by Minebea Co., Ltd.) in an atmosphere at 23°C to determine a 90-degree peel strength as the adhesive strength after heating.

TABLE 1

| | Initial adhesive strength (N/25 mm) | | | | | Debonding capability and adhesive strength after heating (N/25 mm) | | | | |
|---|---|---|---|---|---|---|---|---|---|---|
| | Acrylic plate | PC plate | ABS plate | PS plate | SUS plate | Acrylic plate | PC plate | ABS plate | PS plate | SUS plate |
| Example 1 | 11 | 10 | 8 | 8 | 10 | Good (4) | Good (4) | Good (4) | Good (4) | Good (2) |
| Example 2 | 24 | 17 | 21 | 19 | 26 | Good (2) | Good (2) | Good (2) | Good (2) | Good (2) |
| Example 3 | 23 | 17 | 20 | 18 | 24 | Good (2) | Good (2) | Good (2) | Good (2) | Good (2) |
| Example 4 | 25 | 19 | 21 | 20 | 26 | Good (2) | Good (2) | Good (2) | Good (2) | Good (2) |
| Example 5 | 21 | 15 | 19 | 17 | 23 | Good (2) | Good (2) | Good (2) | Good (2) | Good (2) |
| Example 6 | 24 | 18 | 20 | 20 | 25 | Good (3) | Good (3) | Good (3) | Good (3) | Good (3) |
| Com. Ex. 1 | 32 | 31 | 26 | 28 | 26 | 29 | 26 | 22 | 20 | 55 |
| Com. Ex. 2 | 24 | 20 | 18 | 19 | 24 | 22 | 19 | 17 | 16 | 46 |
| Com. Ex. 3 | 19 | 18 | 13 | 12 | 19 | Good (1) | Good (1) | Good (1) | Good (1) | 55 |

The sheets according to Examples 1 to 6 show good adhesiveness to different adherends and can be easily debonded at the interface between the blowing agent-containing pressure-sensitive adhesive layer and the peelable or peel-assisting film as a result of heating.
In contrast, the sheets according to Comparative Examples 1 and 2 are difficult to debond, although they show good adhesiveness. The sheet according to Comparative Example 3 is difficult to debond from some adherends, although it shows good adhesiveness to different adherends and can be debonded from some other adherends by heating.

Evaluation 2

The sheets prepared in Examples 7 to 13 were evaluated on debonding capability upon the application of current. The results in evaluations are shown in Table 2.

Preparation of Test Samples

For each of the sheets prepared in Examples 7 to 9, the process separator (A) was removed; and for each of the sheets prepared in Examples 10 to 13, one of the two process separators was removed, to expose an adhesive face. To the exposed adhesive face was affixed, using a laminator roll, a poly(ethylene terephthalate) film (PET film; supplied by Toray Industries, Inc. under the trade name of "Lumirror #50") 50 μm thick having a surface treated with corona on one side thereof so that the corona-treated surface was in contact with the adhesive face. The laminate was cut to a width of 25 mm to give a series of test samples as pressure-sensitive adhesive sheets having a thickness of 38 μm and supported on the corona-treated surface of the PET film.

Evaluation 1 of Debonding Capability by Application of Current

For the sheets according to Examples 7 to 11, a test sample was affixed to an adherend (an acrylic plate whose surface had been washed with alcohol (ethanol)) through bonding using sufficient pressure in an atmosphere at 23°C as a result of one reciprocating movement of a 5-kg roller thereon, aged at 23°C for 30 minutes, and the test sample adhered to the adhered as intact was heated by the application of current via terminals led from the aluminum foil in the test sample.
The heating treatment was conducted by applying a voltage of 8 V to heat the aluminum foil to 180°C and maintaining the foil at 180°C for 3 minutes.
After the completion of heating treatment, whether the test sample peeled off from the adherend by expansion or foaming of the blowing agent as a result of electric heating was determined, and the debonding capability was evaluated according to the following criteria.

Criteria:

A test sample was evaluated as having good debonding capability when the test sample peeled off from the adherend as a result of the heating treatment; when the test sample after the heating treatment in evaluation 1 showed a 90-degree peel strength to the adherend of less than 5 N/25 mm as determined according to the above technique of measuring adhesive strength after heating according to evaluation 1; or when the test sample after the heating treatment underwent peeling at the interface between the aluminum foil and the blowing agent-containing pressure-sensitive adhesive layer. In contrast, a test sample was evaluated as having poor debonding capability when the test sample after the heating treatment in evaluation 1 showed a 90-degree peel strength of 5 N/25 mm or more.
Of samples evaluated as having good debonding capability (Good), one undergoing peeling at the interface between a blowing agent-containing pressure-sensitive adhesive layer and the adherend was evaluated as "Good (1)"; one undergoing peeling at the interface between a blowing agent-containing pressure-sensitive adhesive layer and an aluminum foil was evaluated as "Good (2)"; one having two or more multilayer structures composed of a aluminum foil and a blowing agent-containing pressure-sensitive adhesive layer and undergoing peeling at all the interfaces between a blowing agent-containing pressure-sensitive adhesive layer and an aluminum foil was evaluated as "Good (3)"; and one undergoing peeling at the interface between a blowing agent-containing pressure-sensitive adhesive layer and the adherend and at the interface between a blowing agent-containing pressure-sensitive adhesive layer and an aluminum foil was evaluated as "Good (4)".

Evaluation 2 of Debonding Capability by Application of Current

For the sheets according to Examples 12 and 13, a test sample was applied to an adherend (an acrylic plate whose surface had been washed with alcohol (ethanol)) through bonding using sufficient pressure in an atmosphere at 23°C as a result of one reciprocating movement of a 5-kg roller thereon, aged at 23°C for 30 minutes, and the test sample adhered to the adhered as intact was heated by the application of current via terminals led from the planar heating element in the test sample.
The heating treatment was conducted by applying a voltage of 30 V to heat the planar heating element to a temperature in a range from 110°C to 130°C and maintaining the planar heating element at this temperature for 5 minutes.
After the completion of heating treatment, whether the test sample peeled off from the adherend by expansion or foaming of the blowing agent as a result of electric heating was determined, and the debonding capability was evaluated according to the following criteria.

Criteria:

A test sample was evaluated as having good debonding capability when the test sample peeled off from the adherend as a result of the heating treatment; when the test sample after the heating treatment in evaluation 1 showed a 90-degree peel strength to the adherend of less than 5 N/25 mm as determined according to the technique of measuring adhesive strength after heating; or when the test sample after the heating treatment underwent peeling at the interface between the planar heating element and the blowing agent-containing pressure-sensitive adhesive layer. In contrast, a test sample was evaluated as having poor debonding capability when the test sample after the heating treatment in evaluation 1 showed a 90-degree peel strength of 5 N/25 mm or more.

Of samples evaluated as having good debonding capability (Good), one undergoing peeling at the interface between a blowing agent-containing pressure-sensitive adhesive layer and the adherend was evaluated as "Good (1)"; one undergoing peeling at the interface between a blowing agent-containing pressure-sensitive adhesive layer and a planar heating element was evaluated as "Good (2)"; one having two or more multilayer structures composed of a planar heating element and a blowing agent-containing pressure-sensitive adhesive layer and undergoing peeling at all the interfaces between a blowing agent-containing pressure-sensitive adhesive layer and a planar heating element was evaluated as "Good (3)"; and one undergoing peeling at the interface between a blowing agent-containing pressure-sensitive adhesive layer and the adherend and at the interface between a blowing agent-containing pressure-sensitive adhesive layer and a planar heating element was evaluated as "Good (4)".

TABLE 2

| | Debonding capability and adhesive strength after heating (N/25 mm) |
| --- | --- |
| | Acrylic plate |
| Example 7 | Good (4) |
| Example 8 | Good (2) |
| Example 9 | Good (3) |
| Example 10 | Good (3) |
| Example 11 | Good (1) |
| Example 12 | Good (3) |
| Example 13 | Good (1) |

Industrial Applicability

The present invention relates to heat-expandable/peelable acrylic pressure-sensitive adhesive tapes and sheets that maintain a high adhesion force (adhesive strength at room temperature) upon bonding but show a reduced adhesive strength as a result of heating upon peeling, and can thereby be easily debonded.

**Claims**

1.  A heat-expandable/peelable acrylic pressure-sensitive adhesive tape or sheet, at least comprising:

    a pressure-sensitive adhesive layer containing a blowing agent;
    a peelable or peel-assisting film layer; and
    a viscoelastic substrate containing microparticles,
    wherein at least the peelable or peel-assisting film layer and the viscoelastic substrate constitute a multilayer structure, and the multilayer structure is arranged on or above at least one side of the pressure-sensitive adhesive layer so that the pressure-sensitive adhesive layer is in contact with the peelable or peel-assisting film layer with or without the interposition of another layer.

2.  The heat-expandable/peelable acrylic pressure-sensitive adhesive tape or sheet according to claim 1, wherein the multilayer structure comprises the peelable or peel-assisting film layer and the viscoelastic substrate alone.

3. The heat-expandable/peelable acrylic pressure-sensitive adhesive tape or sheet according to one of claims 1 and 2, wherein the pressure-sensitive adhesive layer is arranged in direct contact with the peelable or peel-assisting film layer.

4. The heat-expandable/peelable acrylic pressure-sensitive adhesive tape or sheet according to claim 3, wherein the multilayer structure comprises the peelable or peel-assisting film layer and the viscoelastic substrate alone and is arranged on one side of the pressure-sensitive adhesive layer so that the pressure-sensitive adhesive layer is in direct contact with the peelable or peel-assisting film layer, and wherein the tape or sheet further comprises another viscoelastic substrate containing microparticles and being arranged on the other side of the pressure-sensitive adhesive layer.

5. The heat-expandable/peelable acrylic pressure-sensitive adhesive tape or sheet according to claim 3, wherein the multilayer structure comprises the peelable or peel-assisting film layer and the viscoelastic substrate alone and is arranged on both sides of the pressure-sensitive adhesive layer so that the pressure-sensitive adhesive layer is in direct contact with the peelable or peel-assisting film layer.

6. The heat-expandable/peelable acrylic pressure-sensitive adhesive tape or sheet according to any one of claims 1 to 5, wherein the peelable or peel-assisting film comprises a poly(ethylene terephthalate) film.

7. The heat-expandable/peelable acrylic pressure-sensitive adhesive tape or sheet according to any one of claims 1 to 5, wherein the peelable or peel-assisting film comprises an exothermic film that generates heat upon application of current.

8. The heat-expandable/peelable acrylic pressure-sensitive adhesive tape or sheet according to claim 7, wherein the exothermic film comprises a metal foil.

9. The heat-expandable/peelable acrylic pressure-sensitive adhesive tape or sheet according to any one of claims 1 to 8, wherein the viscoelastic substrate is a polymerized layer derived from a polymerizable composition containing microparticles, the polymerizable composition comprising:

a vinyl monomer mixture or a partially polymerized prepolymer thereof, the vinyl monomer mixture mainly containing at least an alkyl (meth)acrylate having an alkyl moiety containing two to eighteen carbon atoms; a photoinitiator; microparticles; and a polyfunctional (meth)acrylate.

10. The heat-expandable/peelable acrylic pressure-sensitive adhesive tape or sheet according to claim 9, wherein the polymerizable composition comprises:

100 parts by weight of the vinyl monomer mixture or a partially polymerized prepolymer thereof; 0.001 to 5 parts by weight of the photoinitiator; 0.001 to 5 parts by weight of the polyfunctional (meth)acrylate; and the microparticles.

11. The heat-expandable/peelable acrylic pressure-sensitive adhesive tape or sheet according to any one of claims 1 to 10, wherein the microparticles in the viscoelastic substrate have an average particle diameter of 30 to 100 $\mu$m.

12. The heat-expandable/peelable acrylic pressure-sensitive adhesive tape or sheet according to any one of claims 1 to 11, wherein the viscoelastic substrate contains the microparticles in an amount of 5 to 50 percent by volume based on the total volume of the viscoelastic substrate.

13. The heat-expandable/peelable acrylic pressure-sensitive adhesive tape or sheet according to any one of claims 1 to 12, wherein the pressure-sensitive adhesive layer is a polymerized layer derived from a pressure-sensitive adhesive composition containing a blowing agent, the pressure-sensitive adhesive composition comprising:

a vinyl monomer mixture or a partially polymerized prepolymer thereof, the vinyl monomer mixture mainly containing an alkyl (meth)acrylate having an alkyl moiety containing two to eighteen carbon atoms;
a photoinitiator;
a blowing agent; and
a polyfunctional (meth)acrylate, and

wherein the pressure-sensitive adhesive layer has a solvent-insoluble content of 50 to 99 percent by weight.

14. The heat-expandable/peelable acrylic pressure-sensitive adhesive tape or sheet according to claim 13, wherein the pressure-sensitive adhesive composition comprises:

100 parts by weight of the vinyl monomer mixture or a partially polymerized prepolymer thereof, the vinyl monomer mixture mainly containing an alkyl (meth)acrylate having an alkyl moiety containing two to eighteen carbon atoms;
0.001 to 5 parts by weight of the photoinitiator;
10 to 200 parts by weight of the blowing agent; and
0.001 to 5 parts by weight of the polyfunctional (meth)acrylate.

15. The heat-expandable/peelable acrylic pressure-sensitive adhesive tape or sheet according to any one of claims 1 to 14, wherein the blowing agent in the pressure-sensitive adhesive layer comprises heat-expandable microspheres.

16. The heat-expandable/peelable acrylic pressure-sensitive adhesive tape or sheet according to any one of claims 1 to 15, wherein the pressure-sensitive adhesive layer has a thickness of 1 to 300 $\mu$m.

17. A method of peeling a heat-expandable/peelable acrylic pressure-sensitive adhesive tape or sheet, the adhesive tape or sheet at least including:

a pressure-sensitive adhesive layer containing a blowing agent;
a peelable or peel-assisting film layer; and
a viscoelastic substrate containing microparticles,
wherein at least the peelable or peel-assisting film layer and the viscoelastic substrate constitute a multilayer structure, and the multilayer structure is arranged on or above at least one side of the pressure-sensitive adhesive layer so that the pressure-sensitive adhesive layer is in contact with the peelable or peel-assisting film layer with or without the interposition of another layer,
the method comprising the step of:

heating the heat-expandable/peelable acrylic pressure-sensitive adhesive tape or sheet to allow the blowing agent to expand or foam,
to reduce the adhesive strength between an adherend and the pressure-sensitive adhesive layer and/or to reduce the adhesive strength between the pressure-sensitive adhesive layer and the peelable or peel-assisting film layer or the other layer.

18. A method of peeling a heat-expandable/peelable acrylic pressure-sensitive adhesive tape or sheet, the adhesive tape or sheet at least including:

a pressure-sensitive adhesive layer containing a blowing agent;
an exothermic film layer that generates heat upon application of current; and
a viscoelastic substrate containing microparticles,
wherein at least the exothermic film layer and the viscoelastic substrate constitute a multilayer structure, and the multilayer structure is arranged on at least one side of the pressure-sensitive adhesive layer so that the pressure-sensitive adhesive layer is in contact with the exothermic film layer with or without the interposition of another layer,
the method comprising the step of:

applying a current to the exothermic film layer to allow the exothermic film layer to generate heat and thereby cause the blowing agent to expand or foam,
to reduce the adhesive strength between an adherent and the pressure-sensitive adhesive layer and/or to reduce the adhesive strength between the pressure-sensitive adhesive layer and the exothermic film layer or the other layer.

**Patentansprüche**

1. Wärmeausdehnbares/abziehbares druckempfindliches Acrylklebeband oder -folie, mindestens umfassend:

   eine druckempfindliche Klebeschicht, enthaltend ein Treibmittel;
   eine abziehbare oder das Abziehen unterstützende Filmschicht; und
   ein viskoelastisches Substrat, enthaltend Mikropartikel,
   worin mindestens die abziehbaren oder das Abziehen unterstützende Filmschicht und das viskoelastische Substrat eine Mehrschichtstruktur darstellen und die Mehrschichtstruktur auf oder über mindestens einer Seite der druckempfindlichen Klebeschicht angeordnet ist, so dass die druckempfindliche Klebeschicht in Kontakt mit der abziehbaren oder das Abziehen unterstützende Filmschicht ist, mit oder ohne der Einfügung einer anderen Schicht.

2. Das wärmeausdehnbare/abziehbare druckempfindliche Acrylklebeband oder -folie gemäß Anspruch 1, worin die Mehrschichtstruktur allein die abziehbare oder das Abziehen unterstützende Filmschicht und das viskoelastische Substrat umfasst.

3. Das wärmeausdehnbare/abziehbare druckempfindliche Acrylklebeband oder -folie gemäß einem der Ansprüche 1 und 2, worin die druckempfindliche Klebeschicht in direktem Kontakt mit der abziehbaren oder das Abziehen unterstützende Filmschicht angeordnet ist.

4. Das wärmeausdehnbare/abziehbare druckempfindliche Acrylklebeband oder -folie gemäß Anspruch 3, worin die Mehrschichtstruktur die abziehbare oder das Abziehen unterstützende Filmschicht und das viskoelastische Substrat alleine umfasst und auf einer Seite der druckempfindlichen Klebeschicht angeordnet ist, so dass die druckempfindliche Klebeschicht in direktem Kontakt mit der abziehbaren oder das Abziehen unterstützende Filmschicht ist, und
   worin das Band oder die Folie ferner ein weiteres viskoelastisches Substrat umfasst, welches Mikropartikel enthält und auf der anderen Seite der druckempfindlichen Klebeschicht angeordnet ist.

5. Das wärmeausdehnbare/abziehbare druckempfindliche Acrylklebeband oder -folie gemäß Anspruch 3, worin die Multischichtstruktur allein die abziehbare oder das Abziehen unterstützende Filmschicht und das viskoelastische Substrat enthält und auf beiden Seiten der druckempfindlichen Klebeschicht angeordnet ist, so dass die druckempfindliche Klebeschicht in direktem Kontakt mit der abziehbaren oder das Abziehen unterstützende Filmschicht ist.

6. Das wärmeausdehnbare/abziehbare druckempfindliche Acrylklebeband oder -folie gemäß einem der Ansprüche 1 bis 5, worin der abziehbare oder das Abziehen unterstützende Film einen Poly(ethylenterephthalat)-Film umfasst.

7. Das wärmeausdehnbare/abziehbare druckempfindliche Acrylklebeband oder -folie gemäß einem der Ansprüche 1 bis 5, worin der abziehbare oder das Abziehen unterstützende Film einen exothermischen Film umfasst, welcher bei Anlegen eines Stromes Wärme erzeugt.

8. Das wärmeausdehnbare/abziehbare druckempfindliche Acrylklebeband oder -folie gemäß Anspruch 7, worin der exotherme Film eine Metallfolie umfasst.

9. Das wärmeausdehnbare/abziehbare druckempfindliche Acryllebeband oder -folie gemäß einem der Ansprüche 1 bis 8, worin das viskoelastische Substrat eine polymerisierte Schicht ist, erhalten aus einer polymerisierbaren Zusammensetzung, welche Mikropartikel enthält, wobei die polymerisierbare Zusammensetzung umfasst:

   eine Vinylmonomermischung oder ein teilweise polymerisiertes Präpolymer daraus, die Vinylmonomermischung enthält hauptsächlich mindestens ein Alkyl(meth)acrylat mit einem Alkylbaustein, welcher zwei bis achtzehn Kohlenstoffatome enthält;
   einen Fotoinitiator;
   Mikropartikel; und
   ein polyfunktionelles (Meth)acrylat.

**10.** Das wärmeausdehnbare/abziehbare druckempfindliche Acrylklebeband oder -folie gemäß Anspruch 9, worin die polymerisierbare Zusammensetzung umfasst:

100 Gewichtsteile der Vinylmonomermischung oder eines teilweise polymerisierten Präpolymers davon;
0,001 bis 5 Gewichtsteile des Fotoinitiators;
0,001 bis 5 Gewichtsteile des polyfunktionellen (Meth)acrylats; und
die Mikropartikel.

**11.** Das wärmeausdehnbare/abziehbare druckempfindliche Acrylklebeband oder -folie gemäß einem der Ansprüche 1 bis 10, worin die Mikropartikel in dem viskoelastischen Substrat einen durchschnittlichen Teilchendurchmesser von 30 bis 100 $\mu$m aufweisen.

**12.** Das wärmeausdehnbare/abziehbare druckempfindliche Acrylklebeband oder -folie gemäß einem der Ansprüche 1 bis 11, worin das viskoelastische Substrat die Mikropartikel in einer Menge von 5 bis 50 Vol.-% enthält, basierend auf dem Gesamtvolumen des viskoelastischen Substrats.

**13.** Das wärmeausdehnbare/abziehbare druckempfindliche Acrylklebeband oder -folie gemäß einem der Ansprüche 1 bis 12,
worin die druckempfindliche Klebeschicht eine polymerisierte Schicht ist, die aus einer druckempfindlichen Klebezusammensetzung erhalten wird, welche ein Treibmittel enthält, wobei die druckempfindliche Klebezusammensetzung umfasst:

eine Vinylmonomermischung oder ein teilweise polymerisiertes Präpolymer davon,
die Vinylmonomermischung enthält hauptsächlich ein Alkyl(meth)acrylat mit einem Alkylbaustein, der zwei bis achtzehn Kohlenstoffatome enthält;
einen Fotoinitiator;
ein Treibmittel; und
ein polyfunktionelles (Meth)acrylat, und

worin die druckempfindliche Klebeschicht einen lösungsmittelunlöslichen Anteil von 50 bis 99 Gew.-% hat.

**14.** Das wärmeausdehnbare/abziehbare druckempfindliche Acrylklebeband oder -folie gemäß Anspruch 13, worin die druckempfindliche Klebezusammensetzung umfasst:

100 Gewichtsteile der Vinylmonomermischung oder eines teilweise polymerisierten Präpolymers davon, die Vinylmonomermischung besteht hauptsächlich aus Alkyl(meth)acrylat mit einem Alkylbaustein, welcher zwei bis achtzehn Kohlenstoffatome enthält;
0,001 bis 5 Gewichtsteile des Fotoinitiators;
10 bis 200 Gewichtsteile des Treibmittels; und
0,001 bis 5 Gewichtsteile des polyfunktionellen (Meth)acrylats.

**15.** Das wärmeausdehnbare/abziehbare druckempfindliche Acrylklebeband oder -folie gemäß einem der Ansprüche 1 bis 14, worin das Treibmittel in der druckempfindlichen Klebeschicht wärmeausdehnbare Mikrokugeln enthält.

**16.** Das wärmeausdehnbare/abziehbare druckempfindliche Acryllebeband oder -folie gemäß einem der Ansprüche 1 bis 15, worin die druckempfindliche Klebeschicht eine Dicke von 1 bis 300 $\mu$m aufweist.

**17.** Verfahren zum Abziehen eines wärmeausdehnbaren/abziehbaren druckempfindlichen Acrylklebebands oder -folie, wobei das Klebeband oder -folie mindestens beinhaltet:

eine druckempfindliche Klebeschicht, enthaltend ein Treibmittel;
eine abziehbare oder das Abziehen unterstützende Filmschicht; und
ein viskoelastisches Substrat, enthaltend Mikropartikel,
worin mindestens die abziehbare oder das Abziehen unterstützende Filmschicht und das viskoelastische Substrat eine Multischichtstruktur darstellen und die Multischichtstruktur auf oder über mindestens einer Seite der druckempfindlichen Klebeschicht angeordnet ist,
so dass die druckempfindliche Klebeschicht in Kontakt mit der abziehbaren oder das Abziehen unterstützenden Filmschicht ist, mit oder ohne dem Einfügen einer weiteren Schicht,

das Verfahren, umfassend den Schritt:

Erhitzen des wärmeausdehnbaren/abziehbaren druckempfindlichen Acrylklebebands oder -folie, damit das Treibmittel expandieren oder aufschäumen kann,

um die Klebekraft zwischen einer Klebefläche und der druckempfindlichen Klebeschicht zu verringern und/oder die Klebekraft zwischen der druckempfindlichen Klebeschicht und der abziehbaren oder das Abziehen unterstützenden Filmschicht oder der anderen Schicht zu verringern.

18. Verfahren zum Abziehen eines wärmeausdehnbaren/abziehbaren druckempfindlichen Acrylklebebands oder -folie, wobei das Klebeband oder -folie mindestens beinhaltet:

eine druckempfindliche Klebeschicht, enthaltend ein Treibmittel;
eine exotherme Filmschicht, die bei Anlegung von Strom Wärme erzeugt; und
ein viskoelastisches Substrat, enthaltend Mikropartikel,
worin mindestens die exotherme Filmschicht und das viskoelastische Substrat eine Multischichtstruktur darstellen und die Multischichtstruktur auf mindestens einer Seite der druckempfindlichen Klebeschicht angeordnet ist, so dass die druckempfindliche Klebeschicht in Kontakt mit der exothermen Filmschicht ist, mit oder ohne dem Einfügen einer weiteren Schicht,
das Verfahren, umfassend den Schritt von:

Anlegen eines Stromes an die exotherme Filmschicht, um die exotherme Filmschicht Wärme entwickeln zu lassen und dabei das Treibmittel zum Expandieren oder Aufschäumen zu veranlassen,
um die Klebekraft zwischen einer Klebefläche und der druckempfindlichen Klebeschicht zu verringern und/oder die Klebekraft zwischen der druckempfindlichen Klebeschicht und der exothermen Filmschicht oder der anderen Schicht zu verringern.

## Revendications

1. Ruban ou feuille d'adhésif sensible à la pression acrylique expansible/pelable à la chaleur, comprenant au moins :

une couche d'adhésif sensible à la pression contenant un agent d'expansion ;
une couche de film pelable ou facilitant le décollement ; et
un substrat viscoélastique contenant des microparticules,
dans lequel au moins la couche de film pelable ou facilitant le décollement et le substrat viscoélastique constituent une structure multicouche, et la structure multicouche est agencée sur au moins un côté ou au-dessus d'au moins un côté de la couche d'adhésif sensible à la pression de manière à ce que la couche d'adhésif sensible à la pression soit en contact avec la couche de film pelable ou facilitant le décollement avec ou sans interposition d'une autre couche.

2. Ruban ou feuille d'adhésif sensible à la pression acrylique expansible/pelable à la chaleur selon la revendication 1, dans lequel la structure multicouche comprend la couche de film pelable ou facilitant le décollement et le substrat viscoélastique seul.

3. Ruban ou feuille d'adhésif sensible à la pression acrylique expansible/pelable à la chaleur selon l'une quelconque des revendications 1 et 2, dans lequel la couche d'adhésif sensible à la pression est agencée en contact direct avec la couche de film pelable ou facilitant le décollement.

4. Ruban ou feuille d'adhésif sensible à la pression acrylique expansible/pelable à la chaleur selon la revendication 3, dans lequel la structure multicouche comprend la couche de film pelable ou facilitant le décollement et le substrat viscoélastique seul et est agencée d'un côté de la couche d'adhésif sensible à la pression de manière à ce que la couche d'adhésif sensible à la pression soit en contact direct avec la couche de film pelable ou facilitant le décollement, et
dans lequel le ruban ou la feuille comprend en outre un autre substrat viscoélastique contenant des microparticules et étant agencé de l'autre côté de la couche d'adhésif sensible à la pression.

5. Ruban ou feuille d'adhésif sensible à la pression acrylique expansible/pelable à la chaleur selon la revendication 3,

dans lequel la structure multicouche comprend la couche de film pelable ou facilitant le décollement et le substrat viscoélastique seul et est agencée des deux côtés de la couche d'adhésif sensible à la pression de manière à ce que la couche d'adhésif sensible à la pression soit en contact direct avec la couche de film pelable ou facilitant le décollement.

6. Ruban ou feuille d'adhésif sensible à la pression acrylique expansible/pelable à la chaleur selon l'une quelconque des revendications 1 à 5, dans lequel le film pelable ou facilitant le décollement comprend un film en poly(téréphtalate d'éthylène).

7. Ruban ou feuille d'adhésif sensible à la pression acrylique expansible/pelable à la chaleur selon l'une quelconque des revendications 1 à 5, dans lequel le film pelable ou facilitant le décollement comprend un film exothermique qui génère de la chaleur sous l'effet de l'application d'un courant.

8. Ruban ou feuille d'adhésif sensible à la pression acrylique expansible/pelable à la chaleur selon la revendication 7, dans lequel le film exothermique comprend une feuille de métal.

9. Ruban ou feuille d'adhésif sensible à la pression acrylique expansible/pelable à la chaleur selon l'une quelconque des revendications 1 à 8, dans lequel le substrat viscoélastique est une couche polymérisée dérivée d'une composition polymérisable contenant des microparticules, la composition polymérisable comprenant :

un mélange de monomères vinyliques ou un prépolymère partiellement polymérisé de celui-ci, le mélange de monomères vinyliques contenant principalement au moins un (méth)acrylate d'alkyle contenant un groupement alkyle comportant deux à dix-huit atomes de carbone ;
un photoinitiateur ;
des microparticules ; et
un (méth)acrylate polyfonctionnel.

10. Ruban ou feuille d'adhésif sensible à la pression acrylique expansible/pelable à la chaleur selon la revendication 9, dans lequel la composition polymérisable comprend :

100 parties en poids du mélange de monomères vinyliques ou d'un prépolymère partiellement polymérisé de celui-ci ;
0,001 à 5 parties en poids du photoinitiateur ;
0,001 à 5 parties en poids du (méth)acrylate polyfonctionnel ; et les microparticules.

11. Ruban ou feuille d'adhésif sensible à la pression acrylique expansible/pelable à la chaleur selon l'une quelconque des revendications 1 à 10, dans lequel les microparticules du substrat viscoélastique ont un diamètre moyen des particules de 30 à 100 $\mu$m.

12. Ruban ou feuille d'adhésif sensible à la pression acrylique expansible/pelable à la chaleur selon l'une quelconque des revendications 1 à 11, dans lequel le substrat viscoélastique contient les microparticules en une quantité de 5 à 50 pour cent en volume par rapport au volume total du substrat viscoélastique.

13. Ruban ou feuille d'adhésif sensible à la pression acrylique expansible/pelable à la chaleur selon l'une quelconque des revendications 1 à 12,
dans lequel la couche d'adhésif sensible à la pression est une couche polymérisée dérivée d'une composition d'adhésif sensible à la pression contenant un agent d'expansion, la composition d'adhésif sensible à la pression comprenant :

un mélange de monomères vinyliques ou un prépolymère partiellement polymérisé de celui-ci, le mélange de monomères vinyliques contenant principalement un (méth)acrylate d'alkyle contenant un groupement alkyle comportant deux à dix-huit atomes de carbone ;
un photoinitiateur ;
un agent d'expansion ; et
un (méth)acrylate polyfonctionnel, et
dans lequel la couche d'adhésif sensible à la pression a une teneur en composés insolubles dans le solvant de 50 à 99 pour cent en poids.

**14.** Ruban ou feuille d'adhésif sensible à la pression acrylique expansible/pelable à la chaleur selon la revendication 13, dans lequel la composition d'adhésif sensible à la pression comprend : 100 parties en poids du mélange de monomères vinyliques ou d'un prépolymère partiellement polymérisé de celui-ci, le mélange de monomères vinyliques contenant principalement un (méth)acrylate d'alkyle contenant un groupement alkyle comportant deux à dix-huit atomes de carbone ;

0,001 à 5 parties en poids du photoinitiateur ;

10 à 200 parties en poids de l'agent d'expansion ; et

0,001 à 5 parties en poids du (méth)acrylate polyfonctionnel.

**15.** Ruban ou feuille d'adhésif sensible à la pression acrylique expansible/pelable à la chaleur selon l'une quelconque des revendications 1 à 14, dans lequel l'agent d'expansion dans la couche d'adhésif sensible à la pression comprend des microsphères expansibles à la chaleur.

**16.** Ruban ou feuille d'adhésif sensible à la pression acrylique expansible/pelable à la chaleur selon l'une quelconque des revendications 1 à 15, dans lequel la couche d'adhésif sensible à la pression a une épaisseur de 1 à 300 $\mu$m.

**17.** Procédé de décollement d'un ruban ou d'une feuille d'adhésif sensible à la pression acrylique expansible/pelable à la chaleur, le ruban ou la feuille d'adhésif comprenant au moins :

une couche d'adhésif sensible à la pression contenant un agent d'expansion ;
une couche de film pelable ou facilitant le décollement ; et
un substrat viscoélastique contenant des microparticules,
dans lequel au moins la couche de film pelable ou facilitant le décollement et le substrat viscoélastique constituent une structure multicouche, et la structure multicouche est agencée sur au moins un côté ou au-dessus d'au moins un côté de la couche d'adhésif sensible à la pression de manière à ce que la couche d'adhésif sensible à la pression soit en contact avec la couche de film pelable ou facilitant le décollement avec ou sans interposition d'une autre couche,
le procédé comprenant l'étape consistant à :

chauffer le ruban ou la feuille d'adhésif sensible à la pression acrylique expansible/pelable à la chaleur pour permettre l'expansion ou le moussage de l'agent d'expansion,
réduire la résistance de l'adhésif entre une partie adhérée et la couche d'adhésif sensible à la pression et/ou réduire la résistance de l'adhésif entre la couche d'adhésif sensible à la pression et la couche de film pelable ou facilitant le décollement ou l'autre couche.

**18.** Procédé de décollement d'un ruban ou d'une feuille d'adhésif sensible à la pression acrylique expansible/pelable à la chaleur, le ruban ou la feuille d'adhésif comprenant au moins :

une couche d'adhésif sensible à la pression contenant un agent d'expansion ;
une couche de film exothermique qui génère de la chaleur sous l'effet de l'application d'un courant ; et
un substrat viscoélastique contenant des microparticules, dans lequel au moins la couche de film exothermique et le substrat viscoélastique constituent une structure multicouche, et la structure multicouche est agencée sur au moins un côté de la couche d'adhésif sensible à la pression de manière à ce que la couche d'adhésif sensible à la pression soit en contact avec la couche de film exothermique avec ou sans interposition d'une autre couche,
le procédé comprenant l'étape consistant à :

appliquer un courant à la couche de film exothermique pour permettre à la couche de film exothermique de générer de la chaleur et ainsi provoquer l'expansion ou le moussage de l'agent d'expansion,
réduire la résistance de l'adhésif entre une couche adhérée et la couche d'adhésif sensible à la pression et/ou réduire la résistance de l'adhésif entre la couche d'adhésif sensible à la pression et la couche de film exothermique ou l'autre couche.

[Fig.1]

[Fig.2]

[Fig.3]

[Fig.4]

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S5717030 B
- US 4223067 A
- JP H0748549 A
- JP 2001212900 A
- JP 2002088320 A
- JP 2002003800 A
- JP 2002121505 A
- JP 2004018761 A
- JP 2008120903 A
- EP 1592058 A
- US 20040003883 A
- JP 2003013015 A